# EUROPÄISCHE PATENTANMELDUNG

(11) **EP 2 052 616 A1**
(43) Veröffentlichungstag der Anmeldung: **29.04.2009**
(21) Anmeldenummer: 07020859.0
(22) Anmeldetag: 24.10.2007
(51) Int. Cl.: A01N 47/36, A01N 25/32, A01N 43/80, A01N 43/56, A01N 43/42, A01N 41/06, A01P 13/02

(54) **Herbizid-Safener-Kombination**

(71) Anmelder: Bayer CropScience AG, 40789 Monheim (DE)
(72) Erfinder: Rosinger, Chris, Dr., 65719 Hofheim im Taunus (DE); Hacker, Erwin, Dr., 65239 Hochheim (DE); Bonfig-Picard, Georg, Dr., 63517 Rodenbach (DE); Schreiber, Dominique, 60596 Frankfurt (DE); Waldraff, Christian, Dr., 61118 Bad Vilbel (DE); Müller, Klaus-Helmut, Dr., 40593 Düsseldorf (DE); Gesing, R. F. Ernst, Dr., 40699 Erkrath-Hochdahl (DE)

(57) **Zusammenfassung**

Die vorliegende Erfindung bezieht sich auf eine Herbizid-Safener-Kombination, enthaltend
(A) ein oder mehrere Herbizide aus der Gruppe bestehend aus dem 2-Iodo-N-[(4-methoxy-6-methyl-1,3,5-triazin-2-l)carbamoyl]benzolsulfonamid und Verbindungen der allgemeinen Formel (I) 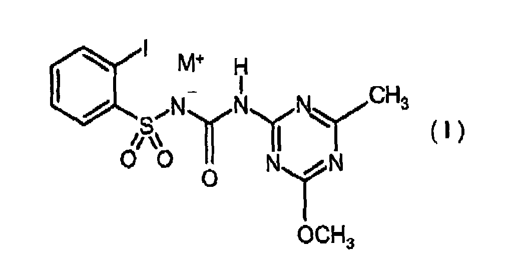 wobei
das Kation (M⁺)

(a) ein Ion der Alkalimetalle, bevorzugt Lithium, Natrium, Kalium, oder
(b) ein Ion der Erdalkalimetalle, bevorzugt Calcium und Magnesium, oder
(c) ein Ion der Übergangsmetalle, bevorzugt Mangan, Kupfer, Zink und Eisen, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-Alkyl, (C₃-C₆)-Cycloalkyl, (C₁-C₄)-Alkoxy-(C₁-C₄)alkyl, Hydroxy-(C₁-C₄)-alkoxy-(C₁-C₄)-alkyl, (C₁-C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₆)-Alkyl, (C₁-C₆)-Haloalkyl, (C₃-C₆)-Cycloalkyl, (C₁-C₆)-Alkoxy, (C₁-C₆)-Haloalkoxy und Phenyl substituiert sind, und wobei jeweils zwei Substituenten am N-Atom zusammen gegebenfalls einen unsubstituierten oder substituierten Ring bilden, oder
(e) ein Phosphonium-Ion, oder
(f) ein Sulfonium-Ion, bevorzugt Tri-((C₁-C₄)-alkyl)-sulfonium, oder
(g) ein Oxonium-Ion, bevorzugt Tri-((C₁-C₄)-alkyl)-oxonium, oder
(h) gegebenenfalls einfach oder mehrfach annellierte und/oder durch (C₁-C₄)-Alkyl substituierte gesättigte oder ungesättigte/aromatische N-haltige heterocyclische ionische Verbindung mit 1-10 C-Atomen im Ringsystem
ist.
bedeutet, und
und
(B) einen oder mehrere Safener.
sowie deren Verwendung zur Bekämpfung von Schadpflanzen.

## Beschreibung

Die Erfindung betrifft das technische Gebiet der Pflanzenschutzmittel, insbesondere Herbizid-Safener-Kombinationen, die hervorragend für den Einsatz gegen Schadpflanzen in Nutzpflanzenkulturen geeignet sind.

Es ist bekannt, dass bestimmte N-(1,3,5-Ttiazin-2-yl-aminocarbonyl)-arylsulfonamide herbizide Eigenschaften aufweisen (vgl. DE 27 15 786).

Allerdings sind diese Wirkstoffe zum Teil nicht voll verträglich mit einigen wichtigen Kulturpflanzen, wie z.B. verschiedene Getreidearten (wie Weizen, Triticale, Gerste, Roggen), Zuckerrohr, Zuckerrübe, Soja, Raps Mais, Reis oder Baumwolle. Sie können deshalb in manchen Kulturen nicht so eingesetzt werden, dass die erwünschte breite herbizide Wirksamkeit gegenüber Schadpflanzen gewährleistet ist.

Aufgabe der vorliegenden Erfindung war es, herbizide Mittel zu finden, in welchen die Selektivität der oben genannten Herbizide gegenüber wichtigen Kulturpflanzen erhöht ist. Diese Aufgabe wird überraschend gelöst durch die Herbizid-Safener-Kombination der vorliegenden Erfindung.

Gegenstand der vorliegenden Erfindung ist daher eine Herbizid-Safener-Kombination, enthaltend
(A) ein oder mehrere Herbizide aus der Gruppe bestehend aus dem 2-lodo-N-[(4-methoxy-6-methyl-1,3,5-triazin-2-I)carbamoyl]benzolsulfonamid und Verbindungen der allgemeinen Formel (I) 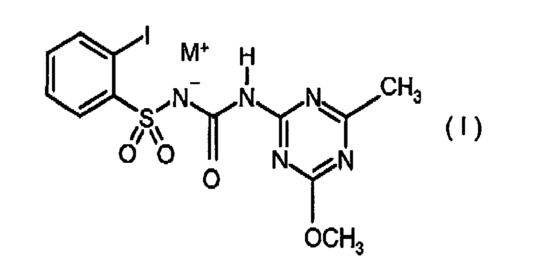 wobei das Kation (M⁺) (a) ein Ion der Alkalimetalle, bevorzugt Lithium, Natrium, Kalium, oder (b) ein Ion der Erdalkalimetalle, bevorzugt Calcium und Magnesium, oder (c) ein Ion der Übergangsmetalle, bevorzugt Mangan, Kupfer, Zink und Eisen, oder (d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-Alkyl, (C₃-C₆)-Cycloalkyl, (C₁-C₄)-Alkoxy-(C₁-C₄)-alkyl, Hydroxy-(C₁-C₄)-alkoxy-(C₁-C₄)-alkyl, (C₁-C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-C₆)-Alkyl, (C₁-C₆)-Haloalkyl, (C₃-C₆)-Cycloalkyl, (C₁-C₆)-Alkoxy, (C₁-C₆)-Haloalkoxy und Phenyl substituiert sind, und wobei jeweils zwei Substituenten am N-Atom zusammen gegebenfalls einen unsubstituierten oder substituierten Ring bilden, oder (e) ein Phosphonium-Ion, oder (f) ein Sulfonium-Ion, bevorzugt Tri-((C₁-C₄)-alkyl)-sulfonium, oder (g) ein Oxonium-Ion, bevorzugt Tri-((C₁-C₄)-alkyl)-oxonium, oder (h) eine gegebenenfalls einfach oder mehrfach annellierte und/oder durch (C₁-C₄)-Alkyl substituierte gesättigte oder ungesättigte/aromatische N-haltige heterocyclische ionische Verbindung mit 1-10 C-Atomen im Ringsystem ist.
bedeutet, und
und

### (B) einen oder mehrere Safener.

Die erfindungsgemäßen Herbizid-Safener-Kombinationen können zusätzliche weitere Komponenten enthalten, z. B. Pflanzenschutzmittelwirkstoffe anderer Art und/oder im Pflanzenschutz übliche Zusatzstoffe und/oder Formulierungshilfsmittel, oder zusammen mit diesen eingesetzt werden.

Die Herbizide (A) und die Safener (B) können auf bekannte Weise angewendet werden, z.B. gemeinsam (beispielsweise als Co-Formulierung oder als TankMischung) oder auch zeitlich versetzt (Splitting), z.B. auf die Pflanzen, Pflanzenteile, Pflanzensamen, Saatgutbehandlung oder die Fläche auf der die Pflanzen wachsen. Möglich ist z.B. die Anwendung der Einzelwirkstoffe oder der Herbizid-Safener-Kombination in mehreren Portionen (Sequenzanwendung), z. B. Saatgutbehandlung gefolgt von Vorauflauf und/oder Nachauflaufanwendung, oder Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination. Möglich ist auch die Anwendung der Einzelwirkstoffe oder der Herbizid-Safener-Kombination zur Saatgutbehandlung.

Die genannte Formel (I) umfaßt alle Stereoisomeren und deren Gemische, insbesondere auch racemische Gemische, und - soweit Enantiomere möglich sind - das jeweils biologisch wirksame Enantiomere.

Als Herbizid (A) bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺)
(a) ein Ion der Alkalimetalle, bevorzugt Lithium, Natrium, Kalium, oder
(b) ein Ion der Erdalkalimetalle, bevorzugt Calcium und Magnesium, oder
(c) ein Ion der Übergangsmetalle, bevorzugt Mangan, Kupfer, Zink und Eisen, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Alkyl, Hydroxy-(C₁-C₄)-Alkyl, (C₃-C₄)-Cycloalkyl, (C₁-C₂)-Alkoxy-(C₁-C₂)-alkyl, Hydroxy-(C₁-C₂)-alkoxy-(C₁-C₂)-alkyl, (C₁-C₂)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro, Cyano, Azido, (C₁-₂)-Alkyl, (C₁-C₂)-Haloalkyl, (C₃-C₄)-Cycloalkyl, (C₁-C₂)-Alkoxy, (C₁-C₂)-Haloalkoxy und Phenyl substituiert sind, und wobei jeweils zwei Substituenten am N-Atom zusammen gegebenfalls einen unsubstituierten oder substituierten Ring bilden, oder
(e) ein quartäres Phosphonium-Ion, bevorzugt Tetra-((C₁-C₄)-alkyl)-phosphonium und Tetraphenyl-phosponium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(f) ein tertiäres Sulfonium-Ion, bevorzugt Tri-((C₁-C₄)-alkyl)-sulfonium oder Triphenyl-sulfonium, wobei die (C₁-C₄)-Alkylreste und die Phenylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind, oder
(g) ein tertiäres Oxonium-Ion, bevorzugt Tri-((C₁-C₄)-alkyl)-oxonium, wobei die (C₁-C₄)-Alkylreste gegebenenfalls einfach oder mehrfach mit gleichen oder verschiedenen Resten aus der Gruppe Halogen, wie F, Cl, Br oder I, (C₁-C₂)-Alkyl, (C₁-C₂)-Haloalkyl, (C₃-C₄)-Cycloalkyl, (C₁-C₂)-Alkoxy und (C₁-C₂)-Haloalkoxy substituiert sind" oder
(h) ein Kation aus der Reihe der folgenden heterocyclischen Verbindungen, wie beispielsweise Pyridin, Chinolin, 2-Methylpyridin, 3-Methylpyridin, 4-Methylpyridin, 2,4-Dimethylpyridin, 2,5-Dimethylpyridin, 2,6-Dimethylpyridin, 5-Ethy!-2-methylpyridin, Piperidin, Pyrrolidin, Morpholin, Thiomorpholin, Pyrrol, Imidazol, 1,5-Diazabicyclo[4.3.0]non-5-en (DBN), 1,8-Diazabicyclo[5.4.0]undec-7-en (DBU) ist.

Die bei den Restedefinitionen genannten Kohlenwasserstoffreste, wie Alkyl, Alkenyl oder Alkinyl, auch in Kombinationen mit Heteroatomen, wie in Alkoxy, Alkylthio, Haloalkyl oder Alkylamino, sind auch dann, wenn dies nicht ausdrücklich angegeben ist, geradkettig oder verzweigt.

Beispiele für als Herbizid (A) bevorzugt verwendete Verbindungen sind das 2-lodo-N-[(4-methoxy-6-methyl-1,3,5-triazin-2-yl)carbamoyl]benzolsulfonamid (A-0) und die in der nachfolgenden Tabelle A genannten Verbindungen der Formel (I) (d.h. der Verbindungen (A-1 bis A-35)).

**Tabelle A: Verbindungen der allgemeinen Formel (I), wobei durch M⁺ das jeweilige Salz der bezeichnet ist**

| | |
|---|---|
| 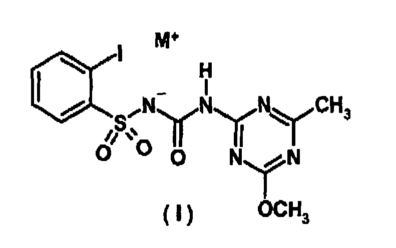 | |
| Verbindung | M⁺ |
| A-1 | Lithium |
| A-2 | Natrium |
| A-3 | Kalium |
| A-4 | Magnesium |
| A-5 | Calcium |
| A-6 | Ammonium |
| A-7 | Methylammonium |
| A-8 | Dimethylammonium |
| A-9 | Tetramethylammonium |
| A-11 | Ethylammonium |
| A-11 | Diethylammonium |
| A-12 | Tetraethylammonium |
| A-13 | Propylammonium |
| A-14 | Tetrapropylammonium |
| A-15 | Isopropylammonium |
| A-16 | Diisopropylammonium |
| A-17 | Butylammonium |
| A-18 | Tetrabutylammonium |
| A-19 | (2-Hydroxyeth-1-yl)ammonium |
| A-20 | Bis-N,N-(2-hydroxyeth-1-yl)ammonium |
| A-21 | Tris-N,N,N-(2-hydroxyeth-1-yl)ammonium |
| A-22 | 1-Phenylethylammonium |
| A-23 | 2-Phenylethylammonium |
| A-24 | Trimethylsulfonium |
| A-25 | Trimethyloxonium |
| A-26 | Pyridinium |
| A-27 | 2-Methylpyridinium |
| A-28 | 4-Methylpyridinium |
| A-29 | 2,4-Dimethylpyridinium |
| A-30 | 2,6-Dimethylpyridinium |
| A-31 | Piperidinium |
| A-32 | Imidazolium |
| A-33 | Morpholinium |
| A-34 | 1,5-Diazabicyclo[4.3.0]non-7-enium |
| A-35 | 1,8-Diazabicyclo[5.4.0]undec-7-enium |

Als Herbizid (A) besonders bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺) ein Natrium-Ion, ein Kalium-Ion, ein Lithium-Ion, ein Magnesium-Ion, ein Calcium-Ion, ein NH₄⁺-Ion, ein (2-Hydroxyeth-1-yl)ammonium-Ion, Bis-N,N-(2-hydroxyeth-1-yl)ammonium-Ion, Tris-N,N,N-(2-hydroxyeth-1-yl)ammonium-Ion, ein

Methylammonium-Ion, ein Dimethylammonium-Ion, ein Trimethylammonium-Ion, ein Tetramethylammonium-Ion ein Ethylammonium-Ion, ein Diethylammonium-Ion, ein Triethylammonium-Ion, ein Tretraethylammonium-Ion ein Isopropylammonium-Ion, ein Diisopropylammonium-Ion, ein Tetrapropylammonium-Ion, ein Tetrabutylammonium-Ion, ein 2-(2-Hydroxyeth-1-oxy)eth-1-yl-ammonium-Ion, ein Di-(2-hydroxyeth-1-yl)-ammonium-Ion, ein Trimethylbenzylammonium-Ion, ein Tri-((C₁-C₄)-alkyl)-sulfonium-Ion, oder ein Tri-((C₁-C₄)-alkyl)-oxonium-Ion, ein Benzylammonium-Ion, ein 1-Phenylethylammonium-Ion, ein 2-Phenylethylammonium-Ion, ein Diisopropylethylammonium-Ion, ein Pyridinium-Ion, ein Piperidinium-Ion, ein Imidazolium-Ion, ein Morpholinium-Ion, ein 1,8-Diazabicyclo[5.4.0]undec-7-enium-Ion ist.

Als Herbizid (A) besonders bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺) ein Natrium-Ion, ein Kalium-Ion, ein Magnesium-Ion, ein Calcium-Ion, oder ein NH₄⁺-Ion ist.

Als Herbizid (A) ebenfalls besonders bevorzugt sind das 2-Iodo-N-[(4-methoxy-6-methyl-1,3,5-triazin-2-yl)carbamoyl]benzolsulfonamid und Verbindungen der Formel (I), in denen das Kation (M⁺), in denen das Kation (M⁺) ein Natrium-Ion, ein Kalium-Ion oder ein NH₄-Ion.

Die Herstellung von Salzen 2-Iodo-N-[(4-methoxy-6-methyl-1,3,5-triazin-2-yl)carbamoyl]benzolsulfonamids, insbesondere von Verbindungen der allgemeinen Fomel (I), ist nach dem Stand der Technik bekannt, vgl. hierzu auch die zeitgleich eingereichte europäische Patentanmeldung der Bayer CropScience AG mit dem Titel "Salze des 2-Iodo-N-[(4-methoxy-6-methyl-1,3,5-triazin-2-yl)carbamoyl]benzolsulfonamids, Verfahren zu deren Herstellung, sowie deren Verwendung als Herbizide und Pflanzenwachstumsregulatoren".

Die Herbizide der Gruppe (A) hemmen das Enzym Acetolactatsynthase (ALS) und damit die Proteinbiosynthese in Pflanzen. Die Aufwandmenge der Herbizide (A) kann in einem weiten Bereich variieren, beispielsweise zwischen 0,001 g und 1500 g AS/ha (AS/ha bedeutet dabei im folgenden "Aktivsubstanz pro Hektar" = bezogen auf 100%igen Wirkstoff). Bei Anwendungen mit Aufwandmengen von 0,001 g bis 1500 g AS/ha der Herbizide (A), vorzugsweise der Verbindungen A-0 bis A-35, wird im Vor- und Nachauflaufverfahren ein relativ breites Spektrum an Schadpflanzen bekämpft, z.B. an annuellen und perennierenden, mono- oder dikotylen Unkräutern sowie an unerwünschten Kulturpflanzen. Bei den erfindungsgemäßen Kombinationen liegen die Aufwandmengen in der Regel, z. B. im Bereich von 0,001 g bis 1000 g AS/ha, vorzugsweise 0,1 g bis 500 g AS/ha, besonders bevorzugt 0,5 g bis 250 g AS/ha.

Die Herbizide (A) sind zur Bekämpfung von Schadpflanzen, z.B. in Pflanzenkulturen geeignet, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrohr, Zuckerrübe, Raps, Baumwolle, Sonnenblume und Leguminosen z.B. der Gattungen Glycine (z.B. Glycine max. (Soja) wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kem- und Steinobst, Beerenobst, Wein, Hevea, Bananen, Zuckerrohr, Kaffee, Tee, Citrus, Nussplantagen, Rasen, Palmenkulturen und Forstkulturen. Für die Anwendung der erfindungsgemäßen Herbizid-Safener-Kombinationen (A)+(B) sind diese Kulturen ebenfalls bevorzugt, besonders bevorzugt ist der Einsatz in Getreide (z.B. Weizen, Gerste, Roggen, Hafer), Reis, Mais, Hirse, Zuckerrübe, Zuckerrohr, Sonnenblume, Raps und Baumwolle. Die Herbizid-Safener-Kombinationen (A)+(B) sind auch einsetzbar in toleranten und nicht toleranten Mutantenkulturen und toleranten und nicht toleranten transgenen Kulturen, vorzugsweise von Mais, Reis, Getreide, Raps und Soja, z.B. solche die gegen Imidazolinon-Herbizide, Atrazin, Glufosinate oder Glyphosate resistent sind.

Unter den als Komponente (B) enthaltenen Safenem werden Verbindungen verstanden, die geeignet sind, phytotoxische Wirkungen von Pflanzenschutzmittelwirkstoffen wie Herbiziden an Kulturpflanzen zu reduzieren.

Von besonderem Interesse ist die selektive Bekämpfung von Schadpflanzen in Kulturen von Nutz- und Zierpflanzen. Obgleich die Herbizide (A), bereits in vielen Kulturen sehr gute bis ausreichende Selektivität aufweisen, können prinzipiell in einigen Kulturen und vor allem auch im Falle von Mischungen mit anderen Herbiziden, die weniger selektiv sind, Phytotoxizitäten an den Kulturpflanzen auftreten. Diesbezüglich sind Herbizide (A) von besonderem Interesse, welche einen oder mehrere Safener enthalten. Die Safener, welche in einem antidotisch wirksamen Gehalt eingesetzt werden, reduzieren die phytotoxischen Nebenwirkungen der eingesetzten Herbizide/Pestizide, z. B. in wirtschaftlich bedeutenden Kulturen wie Getreide (Weizen, Gerste, Roggen, Mais, Reis, Hirse), Zuckerrübe, Zuckerrohr, Raps, Baumwolle und Soja, vorzugsweise Getreide.

Sofern es im Einzelnen nicht anders definiert wird, gelten für die Reste der nachfolgenden Formeln (S-I) bis (S-XII) im Allgemeinen die folgenden Definitionen.

In allen nachfolgend genannten Formeln (S-I)-(S-XII) können die Reste Alkyl, Alkoxy, Haloalkyl, Haloalkoxy, Alkylamino, Alkylthio, Haloalkylthio, Alkylsulfinyl, Alkylsulfonyl, Haloalkylsulfinyl und Haloalkylsulfonyl,sowie die entsprechenden ungesättigten und/oder substituierten Reste im Kohlenstoffgerüst jeweils geradkettig oder verzweigt sein. Wenn nicht speziell angegeben, sind bei diesen Resten die niederen Kohlenstoffgerüste, z.B. mit 1 bis 6 C-Atomen, insbesondere 1 bis 4 C-Atomen, bzw. bei ungesättigten Gruppen mit 2 bis 6 C-Atomen, insbesondere 2 bis 4 C-Atomen, bevorzugt. Alkylreste, auch in den zusammengesetzten Bedeutungen wie Alkoxy, Haloalkyl usw., bedeuten z.B. Methyl, Ethyl, n- oder 1-Propyl, n-, i-, t-oder 2-Butyl, Pentyle, Hexyle, wie n-Hexyl, 1-Hexyl und 1,3-Dimethylbutyl, Heptyle, wie n-Heptyl, 1-Methylhexyl und 1,4-Dimethylpentyl; Alkenyl- und Alkinylreste haben die Bedeutung der den Alkylresten entsprechenden möglichen ungesättigten Reste; wobei mindestens eine Doppelbindung bzw. Dreifachbindung, vorzugsweise eine Doppelbindung bzw. Dreifachbindung enthalten ist. Alkenyl bedeutet z.B. Vinyl, Allyl, 1-Methylprop-2-en-1-yl, 2-Methyl-prop-2-en-1-yl, But-2-en-1-yl, But-3-en-1-yl, 1-Methyl-but-3-en-1-yl und 1-Methyl-but-2-en-1-yl; Alkinyl bedeutet z.B. Ethinyl, Propargyl, But-2-in-1-yl, But-3-in-1-yl, 1-Methyl-but-3-in-1-yl.

Halogen bedeutet Fluor, Chlor, Brom oder Iod. Haloalkyl, -alkenyl und -alkinyl bedeuten durch Halogen, vorzugsweise durch Fluor, Chlor oder Brom, insbesondere durch Fluor und/oder Chlor, teilweise oder vollständig substituiertes Alkyl, Alkenyl bzw. Alkinyl, z.B. Monohaloalkyl (= Monohalogenalkyl), Perhaloalkyl, CF₃, CHF₂, CH₂F, CF₃CF₂, CH₂FCHCl, CCl₃, CHCl₂, CH₂CH₂Cl; Haloalkoxy ist z.B. OCF₃, OCHF₂, OCH₂F, CF₃CF₂O, OCH₂CF₃ und OCH₂CH₂Cl; entsprechendes gilt für Haloalkenyl und andere durch Halogen substituierte Reste.

Aryl bedeutet ein mono-, bi- oder polycyclisches aromatisches System, beispielsweise Phenyl oder Naphthyl, vorzugsweise Phenyl.

Ein heterocyclischer Rest oder Ring (Heterocyclyl oder Heteroaryl) kann gesättigt, ungesättigt oder heteroaromatisch sein; wenn nicht anders definiert, enthält er vorzugsweise ein oder mehrere, insbesondere 1, 2 oder 3 Heteroatome im heterocyclischen Ring, vorzugsweise aus der Gruppe N, O und S; vorzugsweise ist er ein aliphatischer Heterocyclylrest mit 3 bis 7 Ringatomen oder ein heteroaromatischer Rest mit 5 oder 6 Ringatomen. Der heterocyclische Rest kann z.B. ein heteroaromatischer Rest oder Ring (Heteroaryl) sein, wie z.B. ein mono-, bi- oder polycyclisches aromatisches System, in dem mindestens 1 Ring ein oder mehrere Heteroatome enthält. Vorzugsweise ist er ein heteroaromatischer Ring mit einem Heteroatom aus der Gruppe N, O und S, beispielsweise Pyridyl, Pyrrolyl, Thienyl oder Furyl; weiterhin bevorzugt ist er ein entsprechender heteroaromatischer Ring mit 2 oder 3 Heteroatomen, z. B. Pyrimidinyl, Pyridazinyl, Pyrazinyl, Triazinyl, Thiazolyl, Thiadiazolyl, Oxazolyl, Isoxazolyl, Pyrazolyl, Imidazolyl und Triazolyl. Weiterhin bevorzugt ist er ein partiell oder vollständig hydrierter heterocyclischer Rest mit einem Heteroatom aus der Gruppe N, O und S, beispielsweise Oxiranyl, Oxetanyl, Oxolanyl (= Tetrahydrofuryl), Oxanyl, Pyrrolidyl (= Pyrrolidinyl) oder Piperidyl oder auch Pyrrolinyl wie Δ¹-Pyrrolinyl, Δ²-Pyrrolinyl oder Δ³-Pyrrolinyl, z. B. Δ¹-Pyrrolin-2-yl, Δ¹-Pyrrolin-3-yl, Δ¹-Pyrrolin-4-yl oder Δ¹-Pyrrolin-5-yl oder Δ²-Pyrrolin-1-yl, Δ²-Pyrrolin-2-yl, Δ²-Pyrrolin-3-yl, Δ²-Pyrrolin-4-yl, Δ²-Pyrrolin-5-yl oder Δ³-Pyrrolin-1-yl, Δ³-Pyrrolin-2-yl oder Δ³-Pyrrolin-3-yl. Weiterhin bevorzugt ist er ein partiell oder vollständig hydrierter heterocyclischer Rest mit 2 Heteroatomen aus der Gruppe N, O und S, beispielsweise Piperazinyl, Dioxanyl, Dioxolanyl, Oxazolinyl, Isoxazolinyl, Oxazolidinyl, Isoxazolidinyl und Morpholinyl.

Unter der Formulierung, daß bei substituierten Aryl- und Heteroaryl-Resten "Alkyl-, Alkoxy- oder Haloalkoxy-Reste gegebenenfalls untereinander zyklisch verknüpft sind, unter der Voraussetzung, dass sie *ortho*-ständig sind" sind beispielsweise zu verstehen die Gruppen Benzo-1,4-dioxan-yl, 1,3-Benzodioxol-yl, Chroman-yl, 3,4-Dihydro-1H-chroman-yl, 2,3-Dihydro-1-benzofuran, 1,3-Dihydro-1-benzofuran-yl, Indan-yl, 1,2,3,4-Tetrahydronaphthyl, und deren an den gesättigten Kohlenstoffeinheiten halogenierten, insbesondere fluorierten Analogen.

Als Substituenten für einen substituierten heterocyclischen Rest kommen die weiter unten genannten Substituenten in Frage, zusätzlich auch Oxo. Die Oxogruppe kann auch an den Heteroringatomen, die in verschiedenen Oxidationsstufen existieren können, z.B. bei N und S, auftreten.

Mit der Definition "mit einem oder mehreren Resten substituiert ist" sind, wenn nicht anders definiert, ein oder mehrere gleiche oder verschiedene Reste gemeint.

Die beispielhaft genannten Substituenten ("erste Substituentenebene") können, sofern sie kohlenwasserstoffhaltige Anteile enthalten, dort gegebenenfalls weiter substituiert sein ("zweite Substitutentenebene"), beispielsweise durch einen der Substituenten, wie er für die erste Substituentenebene definiert ist. Entsprechende weitere Substituentenebenen sind möglich. Vorzugsweise werden vom Begriff "substituierter Rest" nur ein oder zwei Substitutentenebenen umfasst.

Bei Resten mit C-Atomen sind solche mit 1 bis 6 C-Atomen, vorzugsweise 1 bis 4 C-Atomen, insbesondere 1 oder 2 C-Atomen, bevorzugt. Bevorzugt sind in der Regel Substituenten aus der Gruppe Halogen, z.B. Fluor und Chlor, (C₁-C₄)Alkyl, vorzugsweise Methyl oder Ethyl, (C₁-C₄)-Haloalkyl, vorzugsweise Trifluormethyl, (C₁-C₄)-Alkoxy, vorzugsweise Methoxy oder Ethoxy, (C₁-C₄)-Haloalkoxy, Nitro und Cyano.

Gegebenenfalls substituiertes Phenyl ist vorzugsweise Phenyl, das unsubstituiert oder ein oder mehrfach, vorzugsweise bis zu dreifach durch gleiche oder verschiedene Reste aus der Gruppe Halogen, (C₁-C₄)-Alkyl, (C₁-C₄)-Alkoxy, (C₁-C₄)-Halogenalkyl, (C₁-C₄)-Halogenalkoxy und Nitro substituiert ist, z.B. o-, m- und p-Tolyl, Demethylphenyle, 2-, 3- und 4-Chlrophenyl, 2-, 3- und 4-Trifluormethyl- und 2-, 3- und 4-Trihlormethyl-phenyl, 2,4-, 3,5-, 2,5- und 2,3-Dichlorphenyl, o-, m- und p-Methoxyphenyl

Ein Säurerest einer anorganischen oder organischen Sauerstoffsäure ist ein Rest, der formal durch Abtrennen einer Hydroxygruppe an der Säurefunktion entsteht, beispielweise der Sulfo-Rest -SO₃H, der von der Schwefelsäure H₂SO₄ abgeleitet ist, oder der Sulfinorest -SO₂H, der von der Schwefligen Säure H₂SO₃ abgeleitet ist, oder entsprechend die Gruppe SO₂NH₂, der Phosphorest -PO(OH)₂, die Gruppe -PO(NH₂)₂, -PO(OH)(NH₂), -PS(OH)₂, -PS(NH₂)₂ oder -PS(OH)(NH₂), der Carboxy-Rest COOH, der von der Kohlensäure abgeleitet ist, Reste der Formel -CO-SH, -CS-OH, -CS-SH, -CO-NH₂, -CS-NH₂, -C(=NH)-OH oder -C(=NH)-NH₂; außerdem kommen Reste mit Kohlenwasserstoffresten oder substituierten Kohlenwasserstoffresten in Frage, d. h. Acylreste im weiteren Sinne (= "Acyl").
Die Safener sind vorzugsweise ausgewählt aus der Gruppe bestehend aus:
A) Verbindungen der Formel (S-I), 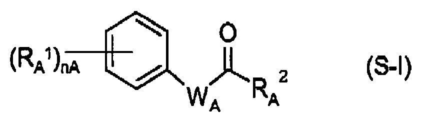 wobei die Symbole und Indizes folgende Bedeutungen haben:
   - n_{A}: ist eine natürliche Zahl von 0 bis 5, vorzugsweise 0 bis 3;
   - R_{A}¹: ist Halogen, (C₁-C₄)-Alkyl, (C₁-C₄)-Alkoxy, Nitro oder (C₁-C₄)-Haloalkyl;
   - W_{A}: ist ein unsubstituierter oder substituierter divalenter heterocyclischer Rest aus der Gruppe der teilungesättigten oder aromatischen Fünfring-Heterocyclen mit 1 bis 3 Heteroringatomen des Typs N oder O, wobei mindestens ein N-
   Atom und höchstens ein Q-Atom im Ring enthalten ist, vorzugsweise ein Rest aus der Gruppe (W_{A}¹) bis (W_{A}⁴), 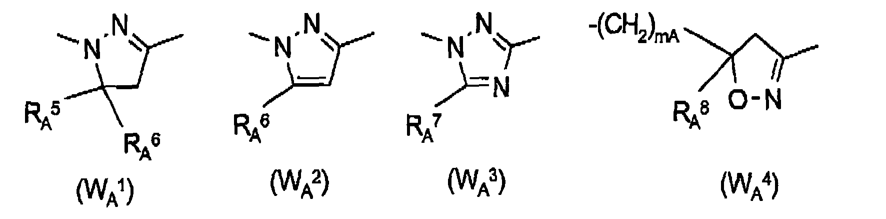
   - m_{A}: ist 0 oder 1;
   - R_{A}²: ist OF_{A}³, SR_{A}³ oder NR_{A}³R_{A}⁴ oder ein gesättigter oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-I) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR_{A}³, NHR_{A}⁴ oder N(CH₃)₂, insbesondere der Formel OR_{A}³;
   - R_{A}³: ist Wasserstoff oder ein unsubstituierter oder substituierter aliphatischer Kohlenwasserstoffrest, vorzugsweise mit insgesamt 1 bis 18 C-Atomen;
   - R_{A}⁴: ist Wasserstoff, (C₁-C₆)-Alkyl, (C₁-C₆)-Alkoxy oder substituiertes oder unsubstituiertes Phenyl;
   - R_{A}⁵: ist H, (C₁-C₈)₋Alkyl, C₁-C₈(Haloalkyl), (C₁-C₄)-Alkoxy(C₁-C₈)-Alkyl, Cyano oder COOR_{A}⁹, worin R_{A}⁹ Wasserstoff, (C₁-C₈)-Alkyl, (C₁-C₈)-Haloalkyl, (C₁-C₄)-Alkoxy-(C₁-C₄)-alkyl, (C₁-C₆)-Hydroxyalkyl, (C₃-C₁₂)-Cycloalkyl oder Tri-(C₁-C₄)-alkyl-silyl ist;
   - R_{A}⁶,: R_{A}⁷, R_{A}⁸ sind gleich oder verschieden Wasserstoff, (C₁-C₈)-Alkyl, (C₁-C₈)-Haloalkyl, (C₃-C₁₂)-Cycloalkyl oder substituiertes oder unsubstituiertes Phenyl;
   vorzugsweise:
   a) Verbindungen vom Typ der Dichlorphenylpyrazolin-3-carbonsäure, vorzugsweise Verbindungen wie 1-(2,4-Dichlorphenyl)-5-(ethoxycarbonyl)-5-methyl-2-pyrazolin-3-carbonsäure-ethylester (S1-1) ("Mefenpyr-diethyl", siehe Pestic. Man.), und verwandte Verbindungen, wie sie in der WO 91/07874 beschrieben sind;
   b) Derivate der Dichlorphenylpyrazolcarbonsäure, vorzugsweise Verbindungen wie 1-(2,4-Dichlorphenyl)-5-methyl-pyrazol-3-carbonsäureethylester (S1-2), 1-(2,4-Dichlorphenyl)-5-isopropyl-pyrazol-3-carbonsäureethylester (S1-3), 1-(2,4-Dichlorphenyl)-5-(1,1-dimethyl-ethyl)pyrazol-3-carbonsäureethyl-ester (S1-4), 1-(2,4-Dichlorphenyl)-5-phenyl-pyrazol-3-carbonsäureethylester (S1-5) und verwandte Verbindungen, wie sie in EP-A-333 131 und EP-A-269 806 beschrieben sind;
   c) Verbindungen vom Typ der Triazolcarbonsäuren, vorzugsweise Verbindungen wie Fenchlorazol(-ethylester), d.h. 1-(2,4-Dichlorphenyl)-5-trichlormethyl-(1H)-1,2,4-triazol-3-carbonsäureethylester (S1-6), und verwandte Verbindungen wie sie in EP-A-174 562 und EP-A-346 620 beschrieben sind;
   d) Verbindungen vom Typ der 5-Benzyl- oder 5-Phenyl-2-isoxazolin-3- carbonsäure, oder der 5,5-Diphenyl-2-isoxazolin-3-carbonsäure vorzugsweise Verbindungen wie 5-(2,4-Dichlorbenzyl)-2-isoxazolin-3-carbonsäureethylester (S1-7) oder 5-Phenyl-2-isoxazolin-3-carbonsäureethylester (S1-8) und verwandte Verbindungen, wie sie in WO 91/08202 beschrieben sind, bzw. der 5,5-Diphenyl-2-isoxazolin-carbonsäureethylester (S1-9) ("Isoxadifen-ethyl") oder-n-propylester (S1-10) oder der 5-(4-Fluorphenyl)-5-phenyl-2-isoxazolin-3-carbonsäureethylester (S1-11), wie sie in der Patentanmeldung WO-A-95/07897 beschrieben sind.
B) Chinolinderivate der Formel (S-II), 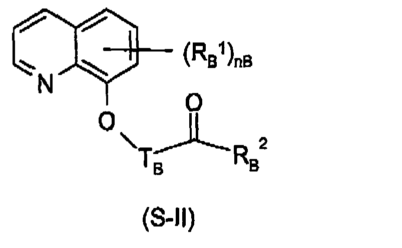 wobei die Symbole und Indizes folgende Bedeutungen haben:
   - R_{B}¹: Halogen, (C₁-C₄)-Alkyl, (C₁-C₄)-Alkoxy, Nitro oder (C₁-C₄)-Haloalkyl;
   - n_{B}: ist eine natürliche Zahl von 0 bis 5, vorzugsweise 0 bis 3;
   - R_{B}²: OR_{B}³, SR_{B}³ oder NR_{B}³R_{B}⁴ oder ein gesättigter
   oder ungesättigter 3- bis 7-gliedriger Heterocyclus mit mindestens einem N-Atom und bis zu 3 Heteroatomen, vorzugsweise aus der Gruppe O und S, der über das N-Atom mit der Carbonylgruppe in (S-II) verbunden ist und unsubstituiert oder durch Reste aus der Gruppe (C₁-C₄)-Alkyl, (C₁-C₄)-Alkoxy oder gegebenenfalls substituiertes Phenyl substituiert ist, vorzugsweise ein Rest der Formel OR_{B}³, NHR_{B}⁴ oder N(CH₃)₂, insbesondere der Formel OR_{B}³;
   R_{B}³ ist Wasserstoff oder ein unsubstituierter oder substituierter aliphatischer Kohlenwasserstoffrest, vorzugsweise mit insgesamt 1 bis 18 C-Atomen;
   R_{B}⁴ ist Wasserstoff, (C₁-C₆)-Alkyl, (C₁-C₆)-Alkoxy oder substituiertes oder unsubstituiertes Phenyl;
   T_{B} ist eine (C₁ oder C₂)-Alkandiylkette, die unsubstituiert oder mit einem oder zwei (C₁-C₄)-Alkylresten oder mit [(C₁-C₃)-Alkoxy]-carbonyl substituiert ist; vorzugsweise:
   a) Verbindungen vom Typ der 8-Chinolinoxyessigsäure (S2), vorzugsweise (5-Chlor-8-chinolinoxy)essigsäure-(1-methylhexyl)-ester (Common name "Cloquintocet-mexyl" (S2-1) (siehe Pestic. Man.), (5-Chlor-8-chinolinoxy)essigsäure-(1,3-dimethyl-but-1-yl)-ester (S2-2), (5-Chlor-8-chinolinoxy)essigsäure-4-allyl-oxy-butylester (S2-3), (5-Ch;or-8-chinolinoxy)essigsäure-1-allyloxy-prop-2-ylester (S2-4), (5-Chlor-8-chinolinoxy)essigsäureethylester (S2-5), (5-Chlor-8-chinolinoxy)ssigsäuremethylester (S2-6), (5-Chlor-8-chinolinoxy)essigsäureallylester (S2-7), (5-Chlor-8-chinolinoxy)essigsäure-2-(2-propyliden-iminoxy)-1-ethylester (S2-8), (5-Chlor-8-chinolinoxy)essigsäure-2-oxo-prop-1-ylester (S2-9) und verwandte Verbindungen, wie sie in EP-A-86 750, EP-A-94 349 und EP-A-191 736 oder EP-A-0 492 366 beschrieben sind, sowie deren Hydrate und Salze wie sie in der WO-A-2002/034048 beschrieben sind.
   b) Verbindungen vom Typ der (5-Chlor-8-chinolinoxy)malonsäure, vorzugsweise Verbindungen wie (5-Chlor-8-chinolinoxy)malonsäurediethylester, (5-Chlor-8-chinolinoxy)malonsäurediallylester, (5-Chlor-8-chinolinoxy)malonsäure-methyl-ethylester und verwandte Verbindungen, wie sie in EP-A-0 582 198 beschrieben sind.
C) Verbindungen der Formel (S-III) 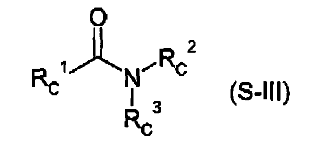 wobei die Symbole und Indizes folgende Bedeutungen haben:
   R_{C}¹ ist (C₁-C₄)-Alkyl, (C₁-C₄)-Haloalkyl, (C₂-C₄)-Alkenyl, (C₂-C₄)-Haloalkenyl,
   (C₃-C₇)-Cycloalkyl, vorzugsweise Dichlormethyl;
   R_{C}², R_{C}³ ist gleich oder verschieden Wasserstoff, (C₁-C₄)-Alkyl, (C₂-C₄)-Alkenyl,
   (C₂-C₄)-Alkinyl, (C₁-C₄)-Haloalkyl, (C₂-C₄)-Haloalkenyl, (C₁-C₄)-Alkylcarbamoyl-
   (C₁-C₄)-alkyl, (C₂-C₄)-Alkenylcarbamoyl-(C₁-C₄)-alkyl, (C₁-C₄)-Alkoxy-(C₁-C₄)-alkyl,
   Dioxolanyl-(C₁-C₄)-alkyl, Thiazolyl, Furyl, Furylalkyl, Thienyl, Piperidyl, substituiertes oder unsubstituiertes Phenyl, oder R_{C}² und R_{C}³ bilden zusammen einen substituierten oder unsubstituierten heterocyclischen Ring, vorzugsweise einen Oxazolidin-, Thiazolidin-, Piperidin-, Morpholin-, Hexahydropyrimidin- oder Benzoxazinring: vorzugsweise: Wirkstoffe vom Typ der Dichloracetamide, die häufig als Vorauflaufsafener (bodenwirksame Safener) angewendet werden, wie z. B. "Dichlormid" (siehe Pestic,Man.) (= N,N-Diallyl-2,2-dichloracetamid), "R-29148" (= 3-Dichloracetyl-2,2,5-trimethyl-1,3-oxazolidin von der Firma Stauffer). "R-28725" (= 3-Dichloracetyl-2,2,-dimethyl-1,3-oxazolidin von der Firma Stauffer), "Benoxacor" (siehe Pestic. Man.) (= 4-Dichloracetyl-3,4-dihydro-3-methyl-2H-1,4-benzoxazin). "PPG-1292" (= N-Allyl-N-[(1,3-dioxolan-2-yl)-methyl]-dichloracetamid von der Firma PPG Industries), "DKA-24" (= N-Allyl-N-[(allylaminocarbonyl)-methyl]-dichloracetamid von der Firma Sagro-Chem), "AD-67" oder "MON 4660" (= 3-Dichloracetyl-1-oxa-3-aza-spiro[4,5]decan von der Firma Nitrokemia bzw. Monsanto), "TI-35" (= 1-Dichloracetyl-azepan von der Firma TRI-Chemical RT) "Diclonon" (Dicyclonon) oder "BAS145138" oder "LAB145138" (= 3-Dichloracetyl-2,5,5-trimethyl-1,3-diazabicyclo[4.3.0]nonan von der Firma BASF) und "Furitazol" oder "MON 13900" (siehe Pestic. Man.) (= (RS)-3-Dichloracetyl-5-(2-furyl)-2,2-dimethyloxazolidin)
D) N-Acylsulfonamide der Formel (S-IV) und ihre Salze, 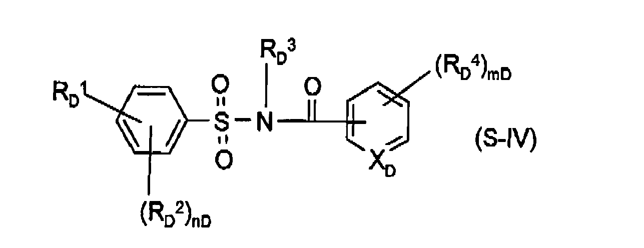 worin
   X_{D} ist CH oder N;
   R_{D}¹ ist CO-NR_{D}⁵R_{D}⁶ oder NHCO-R_{D}⁷;
   R_{D}² ist Halogen, (C₁-C₄)-Haloalkyl, (C₁-C₄)-Haloalkoxy, Nitro, (C₁-C₄)-Alkyl, (C₁-
   C₄)-Alkoxy, (C₁-C₄)-Alkylsulfonyl, (C₁-C₄)-Alkoxycarbonyl oder (C₁-C₄)-Alkylcarbonyl; R_{D}³ ist Wasserstoff, (C₁-C₄)-Alkyl, (C₂-C₄)-Alkenyl oder (C₂-C₄)-Alkinyl;
   R_{D}⁴ ist Halogen, Nitro, (C₁-C₄)-Alkyl, (C₁-C₄)-Haloalkyl, (C₁-C₄)-Haloalkoxy, (C₃-C₆)-Cycloalkyl, Phenyl, (C₁-C₄)-Alkoxy, Cyano, (C₁-C₄)-Alkylthio, (C₁-C₄)-Alkylsulfinyl, (C₁-C₄)-Alkylsulfonyl, (C₁-C₄)-Alkoxycarbonyl oder (C₁-C₄)-Alkylcarbonyl; R_{D}⁵ ist Wasserstoff, (C₁-C₆)-Alkyl, (C₃-C₆)-Cycloalkyl, (C₂-C₆)-Alkenyl, (C₂-C₆)-Alkinyl, (C₅-C₆)-Cycloalkenyl, Phenyl oder 3- bis 6-gliedriges Heterocyclyl enthaltend v_{D} Heteroatome aus der Gruppe Stickstoff, Sauerstoff und Schwefel, wobei die sieben letztgenannten Reste durch v_{D} Substituenten aus der Gruppe Halogen, (C₁-
   C₆)-Alkoxy, (C₁-C₆)-Haloalkoxy, (C₁-C₂)-Alkylsulfinyl, (C₁-C₂)-Alkylsulfonyl, (C₃-C₆)-Cycloalkyl, (C₁-C₄)-Alkoxyc-arbonyl, (C₁-C₄)-Alkylcarbonyl und Phenyl und im Falle cyclischer Reste auch (C₁-C₄)-Alkyl und (C₁-C₄)-Haloalkyl substituiert sind;
   R_{D}⁶ ist Wasserstoff, (C₁-C₆)-Alkyl, (C₂-C₆)-Alkenyl oder (C₂-C₆)-Alkinyl, wobei die drei letztgenannten Reste durch v_{D} Reste aus der Gruppe Halogen, Hydroxy, (C₁-C₄)-Alkyl, (C₁-C₄)-Alkoxy und (C₁-C₄)-Alkylthio substituiert sind, oder
   R_{D}⁵ und R_{D}⁶ bilden gemeinsam mit dem dem sie tragenden Stickstoffatom einen Pyrrolidinyl- oder Piperidinyl-Rest;
   R_{D}⁷ ist Wasserstoff, (C₁-C₄)-Alkylamino, Di-(C₁-C₄)-alkylamino, (C₁-C₆)-Alkyl, (C₃-C₆)-Cycloalkyl, wobei die 2 letztgenannten Reste durch v_{D} Substituenten aus der Gruppe Halogen, (C₁-C₄)-Alkoxy, Halogen-(C₁-C₆)-alkoxy und (C₁-C₄)-Alkylthio und im Falle cyclischer Reste auch (C₁-C₄)-Alkyl und (C₁-C₄)-Haloalkyl substituiert sind;
   - n_{D}: ist 0, 1 oder 2;
   - m_{D}: ist 1 oder 2;
   - v_{D}: ist 0, 1, 2 oder 3;
   davon bevorzugt sind Verbindungen von Typ der N-Acylsulfonamide, z.B. der nachfolgenden Formel (S-V), die z. B. bekannt sind aus WO 97/45016 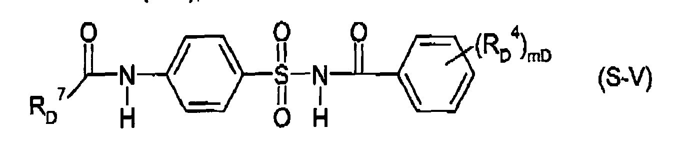 worin
   R_{D}⁷ (C₁-C₆)Alkyl, (C₃-C₆)Cycloalkyl, wobei die 2 letztgenannten Reste durch v_{D} Substituenten aus der Gruppe Halogen, (C₁-C₄)Alkoxy, Halogen-(C₁-C₆)alkoxy und (C₁-C₄)Alkylthlo und im Falle cyclischer Reste auch (C₁-C₄)Alkyl und (C₁-C₄)Haloalkyl substituiert sind;
   - R_{D}⁴: Halogen, (C₁-C₄)-Alkyl, (C₁-C₄)-Alkoxy, CF_{3;}
   - m_{D}: 1 oder 2 bedeutet;
   - v_{D}: ist 0, 1, 2 oder 3;
   sowie Acylsulfamoylbenzoesäureamide, z.B. der nachfolgenden Formel (S-VI), die z.B. bekannt sind aus WO 99/16744, 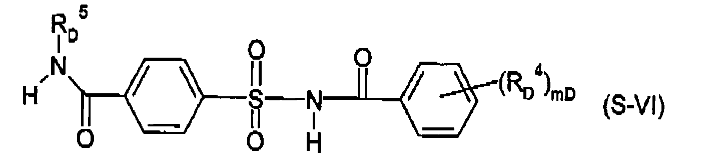 z.B. solche worin
   R_{D}⁵ = Cyclo-Propyl und (R_{D}⁴) = 2-OMe ist ("Cyprosulfamide", S3-1),
   R_{D}⁵ = Cyclo-Propyl und (R_{D}⁴) = 5-Cl-2-OMe ist (S3-2),
   R_{D}⁵ = Methyl und (R_{D}⁴) = 2-OMe ist (S3-3),
   R_{D}⁵ = iso-Propyl und (R_{D}⁴) = 5-Cl-2-OMe ist (S3-4) und
   R_{D}⁵ = iso-Propyl und (R_{D}⁴) = 2-OMe ist (S3-5); sowie
   Verbindungen vom Typ der N-Acylsulfamoylphenylharnstoffe der Formel (S-VII), die z.B. bekannt sind aus der EP-A-365484, 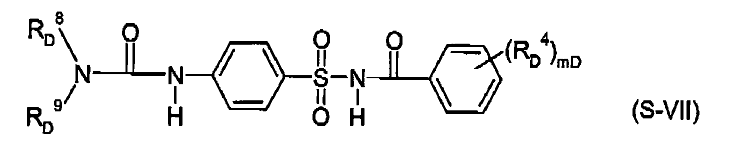 worin
   R_{D}⁸ und R_{D}⁹ unabhängig voneinander Wasserstoff, (C₁-C₈)-Alkyl, (C₃-C₈)-Cycloalkyl,
   (C₃-C₆)-Alkenyl, (C₃-C₆)-Alkinyl,
   R_{D}⁴ Halogen, (C₁-C₄)-Alkyl. (C₁-C₄)-Alkoxy, CF₃
   m_{D} 1 oder 2 bedeutet; davon insbesondere 1-[4-(N-2-Methoxybenzoylsulfamoyl)phenyl]-3-methylhamstoff (S4-1), 1-[4-(N-2-Methoxybenzoylsulfamoyl)phenyl]-3,3-dimethylharnstoff (S4-2), 1-[4-(N-4,5-Dimethylbenzoylsulfamoyl)phenyl]-3-methylhamstoff (S4-3), 1-[4-(N-Naphthoylsulfamoyl)phenyl]-3,3-dimethylhamstoff (S4-4),
G) Wirkstoffe aus der Klasse der Hydroxyaromaten und der aromatischaliphatischen Carbonsäurederivate, z.B. 3,4,5-Triacetoxybenzoesäureethylester, 3,5-Dimethoxy-4-hydroxybenzoesäure, 3,5-Dihydroxybenzoesäure, 4-Hydroxysalicylsäure, 4-Fluorsalicyclsäure, 1,2-Dihydro-2-oxo-6-trifluoromethylpyridin-3-carboxamid, 2-Hydroxyzimtsäure, 2,4-Dichlorzimtsäure, wie sie in der WO 2004084631, WO 2005015994, WO 2006007981, WO 2005016001 beschrieben sind;
H) Wirkstoffe aus der Klasse der 1,2-Dihydrochinoxalin-2-one, z.B. 1-Methyl-3-(2-thienyl)-1,2-dihydrochinoxalin-2o-on, 1-Methyt-3-(2-thienyl)-1,2-dihydrochinoxalin-2-thion, 1-(2-Aminoethyl)-3-(2-thienyl)-1,2-dihydro-chinoxalin-2-on-hydrochlorid, 1-(2-Methylsulfonylaminoethyl)-3-(2-thienyl)-1,2-dihydro-chinoxalin-2-on, 1-[2-(diethylamino)ethyl]-6,7-dimethyl-3-(2-thienyl)chinoxalin (S5-1), wie sie in der WO 2005112630 beschrieben sind,
I) Wirkstoffe, die neben einer herbiziden Wirkung gegen Schadpflanzen auch Safenerwirkung an Kulturpftanzen wie Reis aufweisen, wie z. B. "Dimepiperate" oder "may-93" (siehe Pestic. Man.) (= Piperidin-1-thiocarbonsäure-S-1-methyl-1-phenylethylester), das als Safener für Reis gegen Schäden des Herbizids Molinate bekannt ist, "Daimuron" oder "SK 23" (siehe Pestic. Man.) (= 1-(1-Methyl-1-phenylethyl)-3-p-tolylharnstoff), das als Safener für Reis gegen Schäden des Herbizids Imazosulfuron bekannt ist, °Cumyluron" = "JC-940" (= 3-(2-Chlorphenylmethyl)-1-(1-methyl-1-phenylethyl)hamstoff, siehe JP-A-60087254), das als Safener für Reis gegen Schäden einiger Herbizide bekannt ist, "Methoxyphenon" oder "NK 049" (= 3,3'-Dimethyl-4-methoxy-benzophenon), das als Safener für Reis gegen Schäden einiger Herbizide bekannt ist, "CSB" (= 1-Brom-4-(chlormethylsulfonyl)benzol) (CAS-Reg. Nr. 54091-06-4 von Kumiai), das als Safener gegen Schäden einiger Herbizide in Reis bekannt ist,
K) Verbindungen der Formel (S-IX), wie sie in der WO-A-1998/38856 beschrieben sind 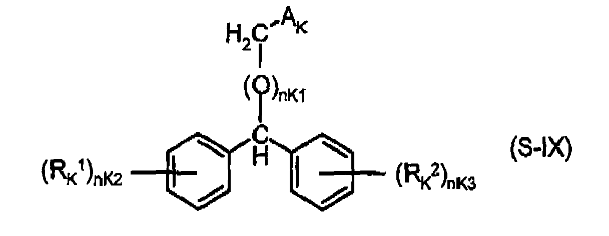 worin die Symbole und Indizes folgende Bedeutungen haben:
   R_{K}¹, R_{K}² unabhängig voneinander Halogen, (C₁-C₄)-Alkyl, (C₁-C₄₎-Alkoxy, (C₁-
   C₄)-Haloalkyl, (C₁-C₄)-Alkylamino, Di-(C₁-C₄)-Alkylamino, Nitro;
   A_{K} COOR_{K}³ oder COOR_{K}⁴
   R_{K}³, R_{K}⁴ unabhängig voneinander Wasserstoff, (C₁-C₄)-Alkyl, (C₂-C₆)-Alkenyl, (C₂-C₄)-Alkinyl, Cyanoalkyl, (C₁-C₄)-Haloalkyl, Phenyl, Nitrophenyl, Benzyl,
   Halobenzyl, Pyridinylaltryl und Alkytammonium,
   n_{K}¹ 0 oder 1
   n_{K}², n_{K}³ unabhängig voneinander 0, 1 oder 2
   vorzugsweise: Methyl-(diphenylmethoxy)acetat (CAS-Regno; 41858-19-9),
L) Verbindungen der Formel (S-X), wie sie in der WO A-98/27049 beschrieben sind 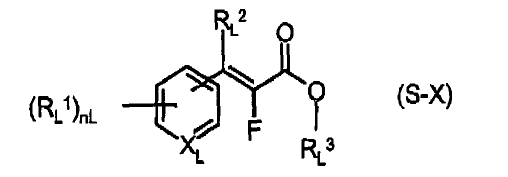 worin die Symbole und Indizes folgende Bedeutungen haben:
   - X_{L}: CH oder N,
   - n_{L}: für den Fall, dass X=N ist, eine ganze Zahl von 0 bis 4 und für den Fall, dass X=CH ist, eine ganze Zahl von 0 bis 5,
   R_{L}¹ Halogen, (C₁-C₄)-Alkyl, (C₁-C₄)-Haloalkyl, (C₁-C₄)Alkoxy, (C₁-C₄)-Haloalkoxy, Nitro, (C₁-C₄)-Alkylthio, (C₁-C₄)-Alkylsulfonyl, (C₁-C₄)-Alkoxycarbonyl, ggf. substituiertes. Phenyl, ggf. substituierte Phenoxy,
   R_{L}² Wasserstoff oder (C₁-C₄)-Alkyl
   R_{L}³ Wasserstoff, (C₁-G₈)-Alkyl, (C₂-C₄)₋Alkenyl, (C₂-C₄)-Alkinyl, oder Aryl, wobei jeder der vorgenannten C-haltigen Reste unsubstituiert oder durch einen oder mehrere, vorzugsweise bis zu drei gleiche oder verschiedene Reste aus der Gruppe, bestehend aus Halogen und Alkoxy substituiert ist; oder deren Salze.
M) Wirkstoffe aus der Klasse der 3-(5-Tetrazolylcarbonyl)-2-chinolone, z.B. 1,2-Dihydro-4-hydroxy-1-ethyl-3-(5-tetrazolylcarbonyl)-2-chinolon (CAS-Regno: 219479-18-2), 1,2-Dihydro-4-hydroxy-1-mathyl-3-(5-tetrazolyl-carbonyl)-2-chinolon (CAS-Regno: 95855-00-8), wie sie in der WO-A-1999000020 beschrieben sind,
N) Verbindungen der Formeln (S-XI) oder (S-XII) wie sie in der WO-A-2007023719 und WO-A-2007023764 beschrieben sind 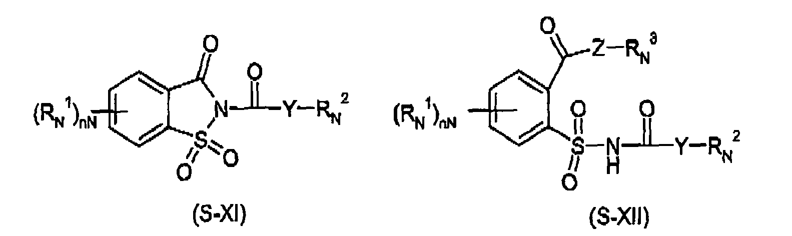 worin
   R_{N}¹ Halogen, (C₁-C₄)-Alkyl, Methoxy, Nitro, Cyano, CF₃, OCF₃
   Y, Z unabhängig voneinander O oder S,
   n_{N} eine ganze Zahl von 0 bis 4,
   R_{N}² (C₁-C₁₆)-Alkyl, (C₂-C₆)-Alkenyl, (C₃-C₆)-Cycloalkyl, Aryl; Benzyl,
   Halogenbenzyl,
   R_{N}³ Wasserstoff, (C₁-C₆)Alkyl bedeuten;
O) eine oder mehreren Verbindungen aus Gruppe: 1,8-Naphthalsäureanhydrid, O,O-Diethyl S-2-ethylthioethyl phosphordithioat (Disulfoton), 4-Chlorphenyl-methylcarbamat (Mephenate), O,O-Diethyl-O-phenylphosphorotioat (Dietholate), 4-Carboxy-3,4-dihydro-2H-1-benzopyran-4-essigsäure (CL-304415, CAS-Regno: 31541-57-8), 2-propenyl 1-oxa-4-azaspiro[4.5]decano-4-carbodithioate (MG-838, CAS-Regno: 133993-74-5), Methyl-[(3-oxo-1H-2-benzothlopyran-4(3H)-yliden)methoxy]acetate (aus WO-A-98/13361; CAS-Regno: 205121-04-6), Cyanomethoxyimino(phenyl)acetonitril (Cyometrinil), 1,3-Dioxolan-2-ylmethoxyimino(phenyl)acetonitril (Oxabetrinil), 4'-Chlor-2,2,2-trifluoracetophenon-O-1,3-dioxolan-2-ylmethyloxim (Fluxofenim), 4,6-Dichlor-2-phenylpyrimidin (Fenclorim), Benzyl-2-chlor-4-trifluormethyl-1,3-thiazol-5-carboxylat (Flurazole), 2-Dichiormethyl-2-methyl-1,3-dioxolan (MG-191), einschließlich der Stereoisomeren und der in der Landwirtschaft gebräuchlichen Salze.

Auch eine Mischung mit anderen bekannten Wirkstoffen, wie Fungiziden, Insektiziden, Akariziden, Nematiziden, Schutzstoffen gegen Vogelfraß, Pflanzennährstoffen und Bodenstrukturverbesserungsmitteln ist möglich.

Einige der Safener sind bereits als Herbizide bekannt und entfalten somit neben der Herbizidwirkung bei Schadpflanzen zugleich auch Schutzwirkung bei den Kulturpflanzen.
Die Gewichtsverhältnisse von Herbizid(mischung) zu Safener hängt im Allgemeinen von der Aufwandmenge an Herbizid und der Wirksamkeit des jeweiligen Safeners ab und kann innerhalb weiter Grenzen variieren, beispielsweise im Bereich von 200:1 bis 1:200, vorzugsweise 100:1 bis 1:100, insbesondere 20:1 bis 1:20. Die Safener können analog den Verbindungen der Formel (I) oder deren Mischungen mit weiteren Herbiziden/Pestiziden formuliert werden und als Fertigformulierung oder Tankmischung mit den Herbiziden bereitgestellt und angewendet werden.

Beispiele für bevorzugte Kombinationen von herbiziden Wirkstoffen (A) und Safenem (B) sind:
(A-0) + (S1-1), (A-0) + (S1-2), (A-0) + (S1-3), (A-0) + (S1-4),
(A-0) + (S1-5), (A-0) + (S1-6), (A-0) + (S1-7), (A-0) + (S1-8).
(A-0) + (S1-9), (A-0) + (S1-10), (A-0) + (S1-11), (A-0) + (S2-1),
(A-0) + (S2-2), (A-0) + (S2-3), (A-0) + (S2-4), (A-0) + (S2-5),
(A-0) + (S2-6), (A-0) + (S2-7), (A-0) + (S2-8), (A-0) + (S2-9),
(A-0) + (S3-1), (A-0) + (S-3-2), (A-0) + (S3-3), (A-0) + (S3-4),
(A-0) + (S3-5), (A-0) + (S4-1), (A-0) + (S4-2), (A-0) + (S4-3),
(A-0) + (S4-4); (A-0) + (S5-1);
(A-1) + (S1-1), (A-1) + (S1-2), (A-1) + (S1-3), (A-1) + (S1-4),
(A-1) + (S1-5), (A-1) + (S1-6), (A-1) + (S1-7), (A-1) + (S1-8),
(A-1) + (S1-9), (A-1) + (S1-10), (A-1) + (S1-11), (A-1) + (S2-1),
(A-1) + (S2-2), (A-1) + (S2-3), (A-1) + (S2-4), (A-1) + (S2-5),
(A-1) + (S2-6), (A-1) + (S2-7), (A-1) + (S2-8), (A-1) + (S2-9),
(A-1) + (S3-1), (A-1) + (S-3-2), (A-1) + (S3-3), (A-1) + (S3-4),
(A-1) + (S3-5), (A-1) + (S4-1), (A-1) + (S4-2), (A-1) + (S4-3),
(A-1) + (S4-4); (A-1) + (S5-1);
(A-2) + (S1-1), (A-2) + (S1-2), (A-2) + (S1-3), (A-2) + (S1-4),
(A-2) + (S1-5), (A-2) + (S1-6), (A-2) + (S1-7), (A-2) + (S1-8),
(A-2) + (S1-9), (A-2) + (S1-10). (A-2) + (S1-11), (A-2) + (S2-1),
(A-2) + (S2-2), (A-2) + (S2-3), (A-2) + (S2-4), (A-2) + (S2-5),
(A-2) + (S2-6), (A-2) + (S2-7), (A-2) + (S2-8), (A-2) + (S2-9),
(A-2) + (S3-1), (A-2) + (S-3-2), (A-2) + (S3-3), (A-2) + (S3-4),
(A-2) + (S3-5), (A-2) + (S4-1), (A-2) + (S4-2), (A-2) + (S4-3),
(A-2) + (S4-4); (A-2) + (S5-1);
(A-3) + (S1-1), (A-3) + (S1-2), (A-3) + (S1-3), (A-3) + (S1-4),
(A-3) + (S1-5), (A-3) + (S1-6), (A-3) + (S1-7), (A-3) + (S1-8),
(A-3) + (S1-9), (A-3) + (S1-10), (A-3) + (S1-11), (A-3) + (S2-1), (A-3) + (S2-2), (A-3) + (S2-3), (A-3) + (S2-4), (A-3) + (S2-5),
(A-3) + (S2-6), (A-3) + (S2-7), (A-3) + (S2-8), (A-3) + (S2-9),
(A-3) + (S3-1), (A-3) + (S-3-2), (A-3) + (S3-3), (A-3) + (S3-4), (A-3) + (S3-5), (A-3) + (S4-1), (A-3) + (S4-2), (A-3) + (S4-3),
(A-3) + (S4-4); (A-3) + (S5-1);
(A-4) + (S1-1), (A-4) + (S1-2), (A-4) + (S1-3), (A-4) + (S1-4),
(A-4) + (S1-5), (A-4) + (S1-6), (A-4) + (S1-7), (A-4) + (S1-8),
(A-4) + (S1-9), (A-4) + (S1-10), (A-4) + (S1-11), (A-4) + (S2-1), (A-4) + (S2-2), (A-4) + (S2-3), (A-4) + (S2-4), (A-4) + (S2-5),
(A-4) + (S2-6), (A-4) + (S2-7), (A-4) + (S2-8), (A-4) + (S2-9),
(A-4) + (S3-1), (A-4) + (S-3-2), (A-4) + (S3-3), (A-4) + (S3-4), (A-4) + (S3-5), (A-4) + (S4-1), (A-4) + (S4-2), (A-4) + (S4-3),
(A-4) + (S4-4); (A-4) + (S5-1);
(A-5) + (S1-1), (A-5) + (S1-2), (A-5) + (S1-3), (A-5) + (S1-4),
(A-5) + (S1-5), (A-5) + (S1-6), (A-5) + (S1-7), (A-5) + (S1-8).
(A-5) + (S1-9), (A-5) + (S1-10), (A-5) + (S1-11), (A-5) + (S2-1), (A-5) + (S2-2), (A-5) + (S2-3), (A-5) + (S2-4), (A-5) + (S2-5),
(A-5) + (S2-6), (A-5) + (S2-7), (A-5) + (S2-8), (A-5) + (S2-9),
(A-5) + (S3-1), (A-5) + (S-3-2), (A-5) + (S3-3), (A-5) + (S3-4), (A-5) + (S3-5), (A-5) + (S4-1), (A-5) + (S4-2), (A-5) + (S4-3),
(A-5) + (S4-4); (A-5) + (S5-1);
(A-6) + (S1-1), (A-6) + (S1-2), (A-6) + (S1-3), (A-6) + (S1-4),
(A-6) + (S1-5), (A-6) + (S1-6), (A-6) + (S1-7), (A-6) + (S1-8),
(A-6) + (S1-9), (A-6) + (S1-10), (A-6) + (S1-11), (A-6) + (S2-1), (A-6) + (S2-2), (A-6) + (S2-3), (A-6) + (S2-4), (A-6) + (S2-5),
(A-6) + (S2-6), (A-6) + (S2-7), (A-6) + (S2-8), (A-6) + (S2-9), (A-6) + (S3-1), (A-6) + (S-3-2), (A-6) + (S3-3), (A-6) + (S3-4), (A-6) + (S3-5), (A-6) + (S4-1), (A-6) + (S4-2), (A-6) + (S4-3),
(A-6) + (S4-4); (A-6) + (S5-1);
(A-7) + (S1-1), (A-7) + (S1-2), (A-7) + (S1-3), (A-7) + (S1-4),
(A-7) + (S1-5), (A-7) + (S1-6), (A-7) + (S1-7), (A-7) + (S1-8),
(A-7) + (S1-9), (A-7) + (S1-10), (A-7) + (S1-11), (A-7) + (S2-1), (A-7) + (S2-2), (A-7) + (S2-3), (A-7) + (S2-4), (A-7) + (S2-5),
(A-7) + (S2-6), (A-7) + (S2-7), (A-7) + (S2-8), (A-7) + (S2-9),
(A-7) + (S3-1), (A-7) + (S-3-2), (A-7) + (S3-3), (A-7) + (S3-4), (A-7) + (S3-5), (A-7) + (S4-1), (A-7) + (S4-2), (A-7) + (S4-3),
(A-7) + (S4-4); (A-7) + (S5-1);
(A-8) + (S1-1), (A-8) + (S1-2), (A-8) + (S1-3), (A-8) + (S1-4),
(A-8) + (S1-5), (A-8) + (S1-6), (A-8) + (S1-7). (A-8) + (S1-8),
(A-8) + (S1-9), (A-8) + (S1-10), (A-8) + (S1-11), (A-8) + (S2-1), (A-8) + (S2-2), (A-8) + (S2-3), (A-8) + (S2-4), (A-8) + (S2-5),
(A-8) + (S2-6), (A-8) + (S2-7), (A-8) + (S2-8), (A-8) + (S2-9),
(A-8) + (S3-1), (A-8) + (S-3-2), (A-8) + (S3-3), (A-8) + (S3-4), (A-8) + (S3-5), (A-8) + (S4-1), (A-8) + (S4-2), (A-8) + (S4-3),
(A-8) + (S4-4); (A-8) + (S5-1);
(A-9) + (S1-1), (A-9) + (S1-2), (A-9) + (S1-3), (A-9) + (S1-4),
(A-9) + (S1-5), (A-9) + (S1-6), (A-9) + (S1-7), (A-9) + (S1-8),
(A-9) + (S1-9), (A-9) + (S1-10), (A-9) + (S1-11), (A-9) + (S2-1), (A-9) + (S2-2), (A-9) + (S2-3), (A-9) + (S2-4), (A-9) + (S2-5),
(A-9) + (S2-6), (A-9) + (S2-7), (A-9) + (S2-8), (A-9) + (S2-9),
(A-9) + (S3-1), (A-9) + (S-3-2), (A-9) + (S3-3), (A-9) + (S3-4), (A-9) + (S3-5), (A-9) + (S4-1), (A-9) + (S4-2), (A-9) + (S4-3),
(A-9) + (S4-4); (A-9) + (S5-1);
(A-10) + (S1-1), (A-10) + (S1-2), (A-10) + (S1-3), (A-10) + (S1-4), (A-10) + (S1-5), (A-10) + (S1-6), (A-10) + (S1-7), (A-10) + (S1-8), (A-10) + (S1-9), (A-10) + (S1-10), (A-10) + (S1-11), (A-10) + (S2-1), (A-10) + (S2-2), (A-10) + (S2-3), (A-10) + (S2-4), (A-10) + (S2-5), (A-10) + (S2-6), (A-10) + (S2-7), (A-10) + (S2-8), (A-10) + (S2-9), (A-10) + (S3-1), (A-110) + (S-3-2), (A-10) + (S3-3), (A-10) + (S3-4), (A-10) + (S3-5), (A-10) + (S4-1), (A-10) + (S4-2), (A-10) + (S4-3), (A-10) + (S4-4); (A-10) + (S5-1);
(A-11) + (S1-1), (A-91) + (S1-2), (A-11) + (S1-3), (A-11) + (S1-4), (A-11) + (S1-5), (A-11) + (S1-6), (A-11) + (S1-7), (A-11) + (S1-8), (A-11) + (S1-9), (A-11) + (S1-10), (A-11) + (S1-11), (A-11) + (S2-1), (A-11) + (S2-2), (A-11) + (S2-3), (A-11) + (S2-4), (A-11) + (S2-5), (A-11) + (S2-6), (A-11) + (S2-7), (A-11) + (S2-8), (A-11) + (S2-9), (A-11) + (S3-1), (A-11) + (S-3-2), (A-11) + (S3-3), (A-11) + (S3-4), (A-11) + (S3-5), (A-11) + (S4-1), (A-11) + (S4-2), (A-11) + (S4-3), (A-11) + (S4-4); (A-11) + (S5-1);
(A-12) + (S1-1), (A-12) + (S1-2), (A-12) + (S1-3), (A-12) + (S1-4), (A-12) + (S1-5), (A-12) + (S1-6), (A-12) + (S1-7), (A-12) + (S1-8). (A-12) + (S1-9), (A-12) + (S1-10), (A-12) + (S1-11), (A-12) + (S2-1), (A-12) + (S2-2), (A-12) + (S2-3), (A-12) + (S2-4), (A-12) + (S2-5), (A-12) + (S2-6), (A-12) + (S2-7), (A-12) + (S2-8), (A-12) + (S2-9), (A-12) + (S3-1), (A-12) + (S-3-2), (A-12) + (S3-3), (A-12) + (S3-4), (A-12) + (S3-5), (A-12) + (S4-1), (A-12) + (S4-2), (A-12) + (S4-3), (A-12) + (S4-4); (A-12) + (S5-1);
(A-13) + (S1-1), (A-13) + (S1-2), (A-13) + (S1-3), (A-13) + (S1-4),
(A-13) + (S1-5), (A-13) + (S1-8), (A-13) + (S1-7). (A-13) + (S1-8), (A-13) + (S1-9), (A-13) + (S1-10), (A-13) + (S1-11), (A-13) + (S2-1), (A-13) + (S2-2), (A-13) + (S2-3), (A-13) + (S2-4), (A-13) + (S2-5), (A-13) + (S2-6), (A-13) + (S2-7), (A-13) + (S2-8), (A-13) + (S2-9),
(A-13) + (S3-1), (A-13) + (S-3-2), (A-13) + (S3-3), (A-13) + (S3-4), (A-13) + (S3-5), (A-13) + (S4-1), (A-13) + (S4-2), (A-13) + (S4-3), (A-13) + (S4-4); (A-13) + (S5-1);
(A-14) + (S1-1), (A-14) + (S1-2), (A-14) + (S1-3), (A-14) + (S1-4), (A-14) + (S1-5), (A-14) + (S1-6), (A-14) + (S1-7), (A-14) + (S1-8), (A-14) + (S1-9), (A-14) + (S1-10), (A-14) + (S1-11), (A-14) + (S2-1), (A-14) + (S2-2), (A-14) + (S2-3), (A-14) + (S2-4), (A-14) + (S2-5), (A-14) + (S2-6), (A-14) + (S2-7), (A-14) + (S2-8), (A-14) + (S2-9), (A-14) + (S3-1), (A-14) + (S-3-2), (A-14) + (S3-3), (A-14) + (S3-4), (A-14) + (S3-5), (A-14) + (S4-1), (A-14) + (S4-2), (A-14) + (S4-3), (A-14) + (S4-4); (A-14) + (S5-1);
(A-15) + (S1-1), (A-15) + (S1-2), (A-15) + (S1-3), (A-15) + (S1-4), (A-15) + (S1-5), (A-15) + (S1-6), (A-15) + (S1-7), (A-15) + (S1-8), (A-15) + (S1-9), (A-15) + (S1-10), (A-15) + (S1-11), (A-15) + (S2-1), (A-15) + (S2-2), (A-15) + (S2-3), (A-15) + (S2-4), (A-15) + (S2-5), (A-15) + (S2-6), (A-15) + (S2-7), (A-15) + (S2-8), (A-15) + (S2-9), (A-15) + (S3-1), (A-15) + (S-3-2), (A-15) + (S3-3), (A-15) + (S3-4), (A-15) + (S3-5), (A-15) + (S4-1), (A-15) + (S4-2), (A-15) + (S4-3), (A-15) + (S4-4); (A-15) + (S5-9);
(A-16) + (S1-1), (A-16) + (S1-2), (A-16) + (S1-3), (A-16) + (S1-4), (A-16) + (S1-5), (A-16) + (S1-6), (A-16) + (S1-7), (A-16) + (S1-8), (A-16) + (S1-9), (A-16) + (S1-10), (A-16) + (S1-11), (A-16) + (S2-1), (A-16) + (S2-2), (A-16) + (S2-3), (A-16) + (S2-4), (A-16) + (S2-5), (A-16) + (S2-6), (A-16) + (S2-7), (A-16) + (S2-8), (A-16) + (S2-9), (A-16) + (S3-1), (A-16) + (S-3-2), (A-16) + (S3-3), (A-16) + (S3-4), (A-16) + (S3-6), (A-16) + (S4-1), (A-16) + (S4-2), (A-16) + (S4-3), (A-16) + (S4-4); (A-16) + (S5-1);
(A-17) + (S1-1), (A-17) + (S1-2), (A-17) + (S1-3), (A-17) + (S1-4),
(A-17) + (S1-5), (A-17) + (S1-6), (A-17) + (S1-7), (A-17) + (S1-8), (A-17) + (S1-9), (A-17) + (S1-10), (A-17) + (S1-11), (A-17) + (S2-1), (A-17) + (S2-2), (A-17) + (S2-3), (A-17) + (S2-4), (A-17) + (S2-5), (A-17) + (S2-6), (A-17) + (S2-7), (A-17) + (S2-8), (A-17) + (S2-9), (A-17) + (S3-1), (A-17) + (S-3-2), (A-17) + (S3-3), (A-17) + (S3-4), (A-17) + (S3-5), (A-17) + (S4-1), (A-17) + (S4-2), (A-17) + (S4-3), (A-17) + (S4-4); (A-17) + (S5-1);
(A-18) + (S1-1), (A-18) + (S1-2), (A-18) + (S1-3), (A-18) + (S1-4), (A-18) + (S1-5), (A-18) + (S1-8), (A-18) + (S1-7). (A-18) + (S1-8), (A-18) + (S1-9), (A-18) + (S1-10), (A-18) + (S1-11), (A-18) + (S2-1), (A-18) + (S2-2), (A-18) + (S2-3), (A-18) + (S2-4), (A-18) + (S2-5), (A-18) + (S2-6), (A-18) + (S2-7), (A-18) + (S2-8), (A-18) + (S2-9), (A-18) + (S3-1), (A-18) + (S-3-2), (A-18) + (S3-3), (A-18) + (S3-4), (A-18) + (S3-6), (A-18) + (S4-1), (A-18) + (S4-2), (A-18) + (S4-3),
(A-18) + (S4-4); (A-18) + (S5-1);
(A-19) + (S1-1), (A-19) + (S1-2), (A-19) + (S1-3), (A-19) + (S1-4), (A-19) + (S1-5), (A-19) + (S1-6), (A-19) + (S1-7), (A-19) + (S1-8), (A-19) + (S1-9), (A-19) + (S1-10), (A-19) + (S1-11), (A-19) + (S2-1), (A-19) + (S2-2), (A-19) + (S2-3), (A-19) + (S2-4), (A-19) + (S2-5), (A-19) + (S2-6), (A-19) + (S2-7), (A-19) + (S2-8), (A-19) + (S2-9), (A-19) + (S3-1), (A-19) + (S-3-2), (A-19) + (S3-3), (A-19) + (S3-4), (A-19) + (S3-5), (A-19) + (S4-1), (A-19) + (S4-2), (A-19) + (S4-3),
(A-19) + (S4-4); (A-19) + (S5-1);
(A-20) + (S1-1), (A-20) + (S1-2), (A-20) + (S1-3), (A-20) + (S1-4), (A-20) + (S1-5), (A-20) + (S1-6), (A-20) + (S1-7), (A-20) + (S1-8), (A-20) + (S1-9), (A-20) + (S1-10), (A-20) + (S1-11), (A-20) + (S2-1), (A-20) + (S2-2), (A-20) + (S2-3), (A-20) + (S2-4), (A-20) + (S2-5), (A-20) + (S2-6), (A-20) + (S2-7), (A-20) + (S2-8), (A-20) + (S2-9), (A-20) + (S3-1), (A-20) + (S-3-2), (A-20) + (S3-3), (A-20) + (S3-4),
(A-20) + (S3-5), (A-20) + (S4-1), (A-20) + (S4-2), (A-20) + (S4-3), (A-20) + (S4-4); (A-20) + (S5-1);
(A-21) + (S1-1), (A-21) + (S1-2), (A-21) + (S1-3), (A-21) + (S1-4), (A-21) + (S1-5), (A-21) + (S1-6), (A-21) + (S1-7), (A-21) + (S1-8), (A-21) + (S1-9), (A-21) + (S1-10), (A-21) + (S1-11), (A-21) + (S2-1), (A-21) + (S2-2), (A-21) + (S2-3), (A-21) + (S2-4), (A-21) + (S2-5), (A-21) + (S2-6), (A-21) + (S2-7), (A-21) + (S2-8), (A-21) + (S2-9), (A-21) + (S3-1), (A-21) + (S-3-2), (A-21) + (S3-3), (A-21) + (S3-4), (A-21) + (S3-5), (A-21) + (S4-1), (A-21) + (S4-2), (A-21) + (S4-3),
(A-21) + (S4-4); (A-21) + (S5-1);
(A-22) + (S1-1), (A-22) + (S1-2), (A-22) + (S1-3), (A-22) + (S1-4), (A-22) + (S1-5), (A-22) + (S1-6), (A-22) + (S1-7), (A-22) + (S1-8), (A-22) + (S1-9), (A-22) + (S1-10), (A-22) + (S1-11), (A-22) + (S2-1), (A-22) + (S2-2), (A-22) + (S2-3), (A-22) + (S2-4), (A-22) + (S2-5), (A-22) + (S2-6), (A-22) + (S2-7), (A-22) + (S2-8), (A-22) + (S2-9), (A-22) + (S3-1), (A-22) + (S-3-2), (A-22) + (S3-3), (A-22) + (S3-4), (A-22) + (S3-5), (A-22) + (S4-1), (A-22) + (S4-2), (A-22) + (S4-3), (A-22) + (S4-4); (A-22) + (S5-1);
(A-23) + (S1-1), (A-23) + (S1-2), (A-23) + (S1-3), (A-23) + (S1-4), (A-23) + (S1-5), (A-23) + (S1-6), (A-23) + (S1-7), (A-23) + (S1-8), (A-23) + (S1-9), (A-23) + (S1-10), (A-23) + (S1-11), (A-23) + (S2-1), (A-23) + (S2-2), (A-23) + (S2-3), (A-23) + (S2-4), (A-23) + (S2-5), (A-23) + (S2-6), (A-23) + (S2-7), (A-23) + (S2-8), (A-23) + (S2-9), (A-23) + (S3-1), (A-23) + (S-3-2), (A-23) + (S3-3), (A-23) + (S3-4), (A-23) + (S3-5), (A-23) + (S4-1), (A-23) + (S4-2), (A-23) + (S4-3), (A-23) + (S4-4); (A-23) + (S5-1);
(A-24) + (S1-1), (A-24) + (S1-2), (A-24) + (S1-3), (A-24) + (S1-4), (A-24) + (S1-5), (A-24) + (S1-6), (A-24) + (S1-7), (A-24) + (S1-8),
(A-24) + (S1-9), (A-24) + (S1-10), (A-24) + (S1-11), (A-24) + (S2-1), (A-24) + (S2-2), (A-24) + (S2-3), (A-24) + (S2-4), (A-24) + (S2-5), (A-24) + (S2-6), (A-24) + (S2-7), (A-24) + (S2-8), (A-24) + (S2-9), (A-24) + (S3-1), (A-24) + (S-3-2), (A-24) + (S3-3), (A-24) + (S3-4), (A-24) + (S3-5), (A-24) + (S4-1), (A-24) + (S4-2), (A-24) + (S4-3), (A-24) + (S4-4); (A-24) + (S5-1);
(A-25) + (S1-1), (A-25) + (S1-2), (A-25) + (S1-3), (A-25) + (S1-4), (A-25) + (S1-5), (A-25) + (S1-6), (A-25) + (S1-7), (A-25) + (S1-8), (A-25) + (S1-9), (A-25) + (S1-10), (A-25) + (S1-11), (A-25) + (S2-1), (A-25) + (S2-2), (A-25) + (S2-3), (A-25) + (S2-4), (A-25) + (S2-5), (A-25) + (S2-6), (A-25) + (S2-7), (A-25) + (S2-8), (A-25) + (S2-9), (A-25) + (S3-1), (A-25) + (S-3-2), (A-25) + (S3-3), (A-25) + (S3-4), (A-25) + (S3-5), (A-25) + (S4-1), (A-25) + (S4-2), (A-25) + (S4-3), (A-25) + (S4-4); (A-25) + (S5-1);
(A-26) + (S1-1), (A-26) + (S1-2), (A-26) + (S1-3), (A-26) + (S1-4), (A-26) + (S1-5), (A-26) + (S1-6), (A-26) + (S1-7), (A-26) + (S1-8), (A-26) + (S1-9), (A-26) + (S1-10), (A-26) + (S1-11), (A-26) + (S2-1), (A-26) + (S2-2), (A-26) + (S2-3), (A-26) + (S2-4), (A-26) + (S2-5), (A-26) + (S2-6), (A-26) + (S2-7), (A-26) + (S2-8), (A-26) + (S2-9), (A-26) + (S3-1), (A-26) + (S-3-2), (A-26) + (S3-3), (A-26) + (S3-4), (A-26) + (S3-5), (A-26) + (S4-1), (A-26) + (S4-2), (A-26) + (S4-3), (A-26) + (S4-4); (A-26) + (S5-1);
(A-27) + (S1-1), (A-27) + (S1-2), (A-27) + (S1-3), (A-27) + (S1-4), (A-27) + (S1-5), (A-27) + (S1-6), (A-27) + (S1-7), (A-27) + (S1-8),
(A-27) + (S1-9), (A-27) + (S1-10), (A-27) + (S1-11), (A-27) + (S2-1), (A-27) + (S2-2), (A-27) + (S2-3), (A-27) + (S2-4), (A-27) + (S2-5), (A-27) + (S2-6), (A-27) + (S2-7), (A-27) + (S2-8), (A-27) + (S2-9), (A-27) + (S3-1), (A-27) + (S-3-2), (A-27) + (S3-3), (A-27) + (S3-4), (A-27) + (S3-5), (A-27) + (S4-1), (A-27) + (S4-2), (A-27) + (S4-3),
(A-27) + (S4-4); (A-27) + (S5-1);
(A-28) + (S1-1), (A-28) + (S1-2), (A-28) + (S1-3), (A-28) + (S1-4),
(A-28) + (S1-5), (A-28) + (S1-6), (A-28) + (S1-7), (A-28) + (S1-8), (A-28) + (S1-9), (A-28) + (S1-10), (A-28) + (S1-11), (A-28) + (S2-1), (A-28) + (S2-2), (A-28) + (S2-3), (A-28) + (S2-4), (A-28) + (S2-5), (A-28) + (S2-6), (A-28) + (S2-7), (A-28) + (S2-8), (A-28) + (S2-9), (A-28) + (S3-1), (A-28) + (S-3-2), (A-28) + (S3-3), (A-28) + (S3-4), (A-28) + (S3-5), (A-28) + (S4-1), (A-28) + (S4-2), (A-28) + (S4-3), (A-28) + (S4-4); (A-28) + (S5-1);
(A-29) + (S1-1), (A-29) + (S1-2), (A-29) + (S1-3), (A-29) + (S1-4), (A-29) + (S1-5), (A-29) + (S1-6), (A-29) + (S1-7), (A-29) + (S1-8), (A-29) + (S1-9), (A-29) + (S1-10), (A-29) + (S9-11), (A-29) + (S2-1), (A-29) + (S2-2), (A-29) + (S2-3), (A-29) + (S2-4), (A-29) + (S2-5), (A-29) + (S2-6), (A-29) + (S2-7), (A-29) + (S2-8), (A-29) + (S2-9), (A-29) + (S3-1), (A-29) + (S-3-2), (A-29) + (S3-3), (A-29) + (S3-4), (A-29) + (S3-5), (A-29) + (S4-1), (A-29) + (S4-2), (A-29) + (S4-3), (A-29) + (S4-4); (A-29) + (S5-1);
(A-30) + (S1-1), (A-30) + (S1-2), (A-30) + (S1-3), (A-30) + (S1-4), (A-30) + (S1-5), (A-30) + (S1-6), (A-30) + (S1-7), (A-30) + (S1-8), (A-30) + (S1-9), (A-30) + (S1-10), (A-30) + (S1-11), (A-30) + (S2-1), (A-30) + (S2-2), (A-30) + (S2-3), (A-30) + (S2-4), (A-30) + (S2-5), (A-30) + (S2-6), (A-30) + (S2-7), (A-30) + (S2-8), (A-30) + (S2-9), (A-30) + (S3-1), (A-30) + (S-3-2), (A-30) + (S3-3), (A-30) + (S3-4), (A-30) + (S3-5), (A-30) + (S4-1), (A-30) + (S4-2), (A-30) + (S4-3), (A-30) + (S4-4); (A-30) + (S5-1);
(A-31) + (S1-1), (A-31) + (S1-2), (A-31) + (S1-3), (A-31) + (S1-4), (A-31) + (S1-5), (A-31) + (S1-6), (A-31) + (S1-7), (A-31) + (S1-8), (A-31) (S1-9), (A-31) + (S1-10), (A-31) + (S1-11), (A-31) + (S2-1),
(A-31) + (S2-2), (A-31) + (S2-3), (A-31) + (S2-4), (A-31) + (S2-5), (A-31) + (S2-6), (A-31) + (S2-7), (A-31) + (S2-8), (A-31) + (S2-9), (A-31) + (S3-1), (A-31) + (S-3-2), (A-31) + (S3-3), (A-31) + (S3-4), (A-31) + (S3-5), (A-31) + (S4-1), (A-31) + (S4-2), (A-31) + (S4-3), (A-31) + (S4-4); (A-31) + (S5-1);
(A-32) + (S1-1), (A-32) + (S1-2), (A-32) + (S1-3), (A-32) + (S1-4), (A-32) + (S1-5), (A-32) + (S1-6), (A-32) + (S1-7), (A-32) + (S1-8), (A-32) + (S1-9), (A-32) + (S1-10), (A-32) + (S1-11), (A-32) + (S2-1), (A-32) + (S2-2), (A-32) + (S2-3), (A-32) + (S2-4), (A-32) + (S2-5), (A-32) + (S2-6), (A-32) + (S2-7), (A-32) + (32-8), (A-32) + (S2-9), (A-32) + (S3-1), (A-32) + (S-3-2), (A-32) + (S3-3), (A-32) + (S3-4), (A-32) + (S3-5), (A-32) + (S4-1), (A-32) + (S4-2), (A-32) + (S4-3),
(A-32) + (S4-4); (A-32) + (S5-1);
(A-33) + (S1-1), (A-33) + (S1-2), (A-33) + (S1-3), (A-33) + (S1-4), (A-33) + (S1-5), (A-33) + (S1-6), (A-33) + (S1-7), (A-33) + (S1-8), (A-33) + (S1-9), (A-33) + (S1-10), (A-33) + (S1-11), (A-33) + (S2-1), (A-33) + (S2-2), (A-33) + (S2-3), (A-33) + (S2-4), (A-33) + (S2-5), (A-33) + (S2-6), (A-33) + (S2-7), (A-33) + (S2-8), (A-33) + (S2-9), (A-33) + (S3-1), (A-33) + (S-3-2), (A-33) + (S3-3), (A-33) + (S3-4), (A-33) + (S3-5), (A-33) + (S4-1), (A-33) + (S4-2), (A-33) + (S4-3),
(A-33) + (S4-4); (A-33) + (S5-1);
(A-34) + (S1-1), (A-34) + (S1-2), (A-34) + (S1-3), (A-34) + (S1-4), (A-34) + (S1-5), (A-34) + (S1-6), (A-34) + (S1-7), (A-34) + (S1-8), (A-34) + (S1-9), (A-34) + (S1-10), (A-34) + (S1-11), (A-34) + (S2-1), (A-34) + (S2-2), (A-34) + (S2-3), (A-34) + (S2-4), (A-34) + (S2-5),
(A-34) + (S2-6), (A-34) + (S2-7), (A-34) + (S2-8), (A-34) + (S2-9), (A-34) + (S3-1), (A-34) + (S-3-2), (A-34) + (S3-3), (A-34) + (S3-4), (A-34) + (S3-5), (A-34) + (S4-1), (A-34) + (S4-2), (A-34) + (S4-3),
(A-34) + (S4-4); (A-34) + (S5-1);
(A-35) + (S1-1), (A-35) + (S1-2), (A-35) + (S1-3), (A-35) + (S1-4),
(A-35) + (S1-5), (A-35) + (S1-6), (A-35) + (S1-7), (A-35) + (S1-8),
(A-35) + (S1-9), (A-35) + (S1-10), (A-35) + (S1-11), (A-35) + (S2-1),
(A-35) + (S2-2), (A-35) + (S2-3), (A-35) + (S2-4), (A-35) + (S2-5),
(A-35) + (S2-6), (A-35) + (S2-7), (A-35) + (S2-8), (A-35) + (S2-9),
(A-35) + (S3-1), (A-35) + (S-3-2), (A-35) + (S3-3), (A-35) + (S3-4),
(A-35) + (S3-5), (A-35) + (S4-1), (A-35) + (S4-2), (A-35) + (S4-3),
(A-35) + (S4-4); (A-35) + (S5-1);

Besonders bevorzugte Kombinationen von Herbiziden Wirkstoffen (A) wie in Tabelle (I) benannt und Safenem (B) sind solche, bei denen der Safener (B) ausgewählt ist aus der Gruppe von Safenem bestehend aus den Verbindungen S1-1(=Mefenpyr-diethyl), S1-9 (=Isoxadifen-ethyl), S2-1 (=Chloquintocet-mexyl), S3-1 (=Cyprosulfamid), ganz besonders bevorzugt als Safener (B) sind Verbindungen S1-1 (=Mefenpyr-diethyl) und S3-1 (Cyprosulfamid)

Für die Anwendung in Reis besonders bevorzugt ist S1-9 (= Isoxadifen-ethyl). Für die Anwendung in Getreide besonders bevorzugt sind S1-1 (= Mefenpyr-diethyl), S2-1 (= Cloquintocet-mexyl) und S3-1 (=Cyprosulfamide), in Mais insbesondere S1-9 (= Isoxadifen-ethyl) und 4 S3-1 (Cyprosulfamide). Für die Anwendung in Zuckerrohr bevorzugt ist S1-9 (=Isoxadifen-ethyl).

Die Safener (Verbindungen der Gruppe B) der Formeln (S-I) - (S-XII) eignen sich zur Reduktion phytotoxischer Effekte, die beim Einsatz von Herbiziden (A) in Nutzpflanzenkulturen auftreten können, ohne die Wirksamkeit dieser herbiziden Wirkstoffe gegen Schadpflanzen wesentlich zu beeinträchtigen. Hierdurch kann das Einsatzgebiet herkömmlicher Pflanzenschutzmittel ganz erheblich erweitert z.B. auf Kulturen, in denen bisher ein Einsatz der Herbizide nicht möglich oder nur beschränkt möglich war,

Die benötigten Aufwandmengen der Safener können je nach Indikation und verwendetem herbiziden Wirkstoff innerhalb weiter Grenzen schwanken und sind in der Regel im Bereich von 1 bis 5000 g, vorzugsweise 5 bis 2500 g Wirkstoff je Hektar.

Die herbiziden Wirkstoffe (A) und die Safener (B) können zusammen (z.B. als fertige Formulierung oder im Tank-mix-Verfahren) oder in beliebiger Reihenfolge nacheinander ausgebracht werden, z.B. durch Sprüh-, Gieß- und Spritzanwendung oder durch Granulatstreuung. Das Gewichtsverhältnis Herbizid (A) ; Safener (B) kann innerhalb weiter Grenzen variieren und liegt vorzugsweise im Bereich von 1 : 10000 bis 10000 : 1, insbesondere im Bereich von 1 : 5000 bis 5000 : 1 und ganz besonders bevorzugt im Bereich von 1 : 1000 bis 1000 : 1. Die jeweils optimalen Mengen an Herbizid und Safener sind vom Typ des verwendeten Herbizids und des verwendeten Safeners sowie von der Art und dem Entwicklungsstadium des zu behandelnden Pflanzenbestandes abhängig und lassen sich von Fall zu Fall durch einfache, routinemäßige Vorversuche ermitteln.

Die in der erfindungsgemäßen Herbizid-Safener-Kombination enthaltenen Safener (B) können je nach ihren Eigenschaften zur Vorbehandlung des Saatgutes der Kulturpflanze (z.B. zur Beizung des Saatguts) verwendet werden oder vor der Saat in die Saatfurchen eingebracht oder zusammen mit dem Herbizid vor oder nach dem Auflaufen der Pflanzen angewendet werden. Vorauflaufbehandlung schließt sowohl die Behandlung der Anbaufläche (einschließlich eventuell auf der Anbaufläche befindlichen Wassers, z.B. bei Reisapplikationen) vor der Aussaat als auch die Behandlung der angesäten, aber noch nicht bewachsenen Anbauflächen ein. Bevorzugt ist die gemeinsame Anwendung mit dem Herbizid. Hierzu können Tankmischungen oder Fertigformulierungen eingesetzt werden.

In einer bevorzugten Ausführungsform werden das Saatgut (z.B. Körner, Samen oder vegetative Vermehrungsorgane wie Knollen oder Sprossteile mit Knospen) oder Setzlinge mit den Safenem (B), gegebenenfalls in Kombination mit anderen agrochemischen Wirkstoffen, vorbehandelt. Zur Vorbehandlung des Saatguts können die Wirkstoffe z.B. durch Beizung an das Saatgut gebracht oder die Wirkstoffe und das Saatgut können in Wasser oder andere Lösungsmittel gegeben, und die Wirkstoffe z.B. durch Anlagerung oder Diffusion im Tauchverfahren oder durch Quellen oder Vorkeimen aufgenommen werden. Zur Vorbehandlung von Setzlingen können die jungen Pflanzen z.B. durch Spritzen, Tauchen oder Gießen mit den Safenem, gegebenenfalls in Kombination mit anderen agrochemischen Wirkstoffen, in Kontakt gebracht und anschließend verpflanzt und gegebenenfalls mit den Herbiziden (A) nachbehandelt werden.

Die Saatgut- oder Setzlingsbehandlung kann mit den Safenem (B) alleine oder gemeinsam mit anderen agrochemischen Wirkstoffen - wie Fungiziden, Insektiziden oder Mitteln zur Pflanzenstärkung, Düngung oder zur Beschleunigung der Quell- und Keimungsvorgänge - erfolgen. Dabei können die Safener nach der Vorbehandlungsanwendung anschließend nochmals vor, nach oder gemeinsam mit einem oder mehreren Herbiziden (A) eventuell auch in Kombination mit anderen bekannten Herbiziden angewandt werden. Durch die Vorbehandlung des Saatguts oder der Setzlinge kann eine verbesserte Langzeitwirkung der Safener erzielt werden.

Gegenstand der vorliegenden Erfindung ist somit weiterhin ein Verfahren zur Bekämpfung von unerwünschten Pflanzen in Pflanzenkulturen, das dadurch gekennzeichnet ist, daß die Komponenten (A) und (B) der erfindungsgemäßen Herbizid-Safener-Kombination auf die Pflanzen (z.B. Schadpflanzen wie mono- oder dikotyle Unkräuter oder unerwünschte Kulturpflanzen), das Saatgut (z.B. Körner, Samen oder vegetative Vermehrungsorgane wie Knollen oder Sprossteile mit Knospen) oder die Fläche, auf der die Pflanzen wachsen (z.B. die Anbaufläche), ausgebracht werden, z.B. gemeinsam oder getrennt. Dabei können einer oder mehrere Safener (B), vorzugsweise eine oder mehrere, insbesondere eine, Verbindung der Formel (S-I), bis (S-XII), und/oder aus der Gruppe (B) vor, nach oder gleichzeitig mit dem oder den Herbizid(en) (A) auf die Pflanzen, das Saatgut oder die Fläche, auf der die Pflanzen wachsen (z.B. die Anbaufläche), appliziert werden.

In einer bevorzugten Ausführungsform werden die Safener (B) zur Saatgutbehandlung eingesetzt. Unter unerwünschten Pflanzen sind alle Pflanzen zu verstehen, die an Orten wachsen, wo sie unerwünscht sind. Dies können z.B. Schadpflanzen (z.B. mono- oder dikotyle Unkräuter oder unerwünschte Kulturpflanzen) sein, z.B. auch solche, die gegen bestimmte herbizide Wirkstoffe wie Glyphosate, Atrazin, Glufosinate oder Imidazolinon-Herbizide resistent sind.

Auf der Seite der monokotylen Unkrautarten werden z.B. Avena spp., Alopecurus spp., Apera spp., Brachiaria spp., Bromus spp., Digitaria spp., Lolium spp., Echinochloa spp., Panicum spp., Phalaris spp., Poa spp., Setaria spp. sowie Cyperusarten aus der annuellen Gruppe und auf seiten der perennierenden Spezies Agropyron, Cynodon, Imperata sowie Sorghum und auch ausdauernde Cyperusarten gut erfaßt.

Bei dikotylen Unkrautarten erstreckt sich das Wirkungsspektrum auf Arten wie z.B. Abutilon spp., Amaranthus spp., Chenopodium spp., Chrysanthemum spp., Galium spp., Ipomoea spp., Kochia spp., Lamium spp., Matricaria spp., Pharbitis spp., Polygonum spp.,Sida spp., Sinapis spp., Solanum spp., Stellaria spp., Veronica spp. und Viola spp., Xanthium spp., auf der annuellen Seite sowie Convolvulus, Cirsium, Rumex und Artemisia bei den perennierenden Unkräutern.

Bevorzugt wird in dem erfindungsgemäßen Verfahren eine wirksame Menge der Komponenten (A) und (B) zur Bekämpfung von Schadpflanzen angewendet in Pflanzenkulturen, beispielsweise in wirtschaftlich bedeutenden Ackerbaukulturen z.B. monokotylen Ackerbaukulturen wie Getreide (z.B. Weizen, Gerste, Roggen, Hafer), Reis, Mais, Hirse, oder dikotylen Ackerbaukulturen wie Zuckerrübe, Raps, Baumwolle, Sonnenblumen und Leguminosen z.B. der Gattungen Glycine (z.B. Glycine max. wie nicht-transgene Glycine max. (z.B. konventionelle Sorten wie STS-Sorten) oder transgene Glycine max. (z.B. RR-Soja oder LL-Soja) und deren Kreuzungen), Phaseolus, Pisum, Vicia und Arachis, oder Gemüsekulturen aus verschiedenen botanischen Gruppen wie Kartoffel, Lauch, Kohl, Karotte, Tomate, Zwiebel, sowie Dauer- und Plantagenkulturen wie Kern- und Steinobst, Beerenobst, Wein, Hevea, Bananen, Zuckerrohr, Kaffee, Tee, Citrus, Nussplantagen, Rasen, Palmenkulturen und Forstkulturen.

Gegenstand der Erfindung ist auch die Verwendung der erfindungsgemäßen Herbizid-Safener-Kombinationen zur Bekämpfung von unerwünschtem Pflanzenwuchs, vorzugsweise in Pflanzenkulturen.

Die erfindungsgemäßen Herbizid-Safener-Kombinationen können nach bekannten Verfahren z.B. als Mischformulierungen der Einzelkomponenten, gegebenenfalls mit weiteren Wirkstoffen, Zusatzstoffen und/oder üblichen Formulierungshilfsmifteln hergestellt werden, die dann in üblicher Weise mit Wasser verdünnt zur Anwendung gebracht werden, oder als sogenannte Tankmischungen durch gemeinsame Verdünnung der getrennt formulierten oder partiell getrennt formulierten Einzelkomponenten mit Wasser hergestellt werden. Ebenfalls möglich ist die zeitlich versetzte Anwendung (Splitapplikation) der getrennt formulierten oder partiell getrennt formulierten Einzelkomponenten. Möglich ist auch die Anwendung der Einzelkomponenten oder der Herbizid-Safener-Kombinationen in mehreren Portionen (Sequenzanwendung), z. B. nach Anwendungen im Vorauflauf, gefolgt von Nachauflauf-Applikationen oder nach frühen Nachauflaufanwendungen, gefolgt von Applikationen im mittleren oder späten Nachauflauf. Bevorzugt ist dabei die gemeinsame oder die zeitnahe Anwendung der Wirkstoffe der jeweiligen Kombination.

Die erfindungsgemäße Herbizid-Safener-Kombination kann auch zur Bekämpfung von Schadpflanzen in Kulturen von bekannten oder noch zu entwickelnden gentechnisch veränderten Pflanzen eingesetzt werden. Die transgenen Pflanzen zeichnen sich in der Regel durch besondere vorteilhafte Eigenschaften aus, beispielsweise durch Resistenzen gegenüber bestimmten Pflanzenschutzmitteln, Resistenzen gegenüber Pflanzenkrankheiten oder Erregern von Pflanzenkrankheiten wie bestimmten Insekten oder Mikroorganismen wie Pilzen, Bakterien oder Viren. Andere besondere Eigenschaften betreffen z. B. das Erntegut hinsichtlich Menge, Qualität, Lagerfähigkeit, Zusammensetzung und spezieller Inhaltsstoffe. So sind transgene Pflanzen mit erhöhtem Stärkegehalt oder veränderter Qualität der Stärke oder solche mit anderer Fettsäurezusammensetzung oder Aminosäurezusammensetzung des Emteguts bekannt.

Bevorzugt ist die Anwendung der erfindungsgemäßen Kombinationen in wirtschaftlich bedeutenden transgenen Kulturen von Nutz-und Zierpflanzen, z. B. von Getreide (z.B. Weizen, Gerste, Roggen, Hafer), Hirse, Reis, Maniok und Mais oder auch Kulturen von Zuckerrohr, Zuckerrübe, Baumwolle, Soja, Raps, Kartoffel, Tomate, Erbse und anderen Gemüsekulturen.

Bei der Anwendung der erfindungsgemäßen Kombinationen in transgenen Kulturen treten neben den in anderen Kulturen zu beobachtenden Wirkungen gegenüber Schadpflanzen oftmals Wirkungen auf, die für die Applikation in der jeweiligen transgenen Kultur spezifisch sind, beispielsweise ein verändertes oder speziell erweitertes Unkrautspektrum, das bekämpft werden kann, veränderte Aufwandmengen, die für die Applikation eingesetzt werden können, vorzugsweise gute Kombinierbarkeit mit den Herbiziden, gegenüber denen die transgene Kultur resistent ist, sowie Beeinflussung von Wuchs und Ertrag der transgenen Kulturpflanzen.

Gegenstand der Erfindung ist deshalb auch die Verwendung des erfindungsgemäßen herbizid wirksamen Mittels zur Bekämpfung von Schadpflanzen in transgenen Kulturpflanzen oder Kulturpflanzen, die Toleranz durch Selektionszüchtung aufweisen.

Die Herbizide (A) und die Safener (B) können gemeinsam oder getrennt in übliche Formulierungen z.B. zur Sprüh-, Gieß-, Spritz- und Saatgutbeizanwendung übergeführt werden, wie Lösungen, Emulsionen, Suspensionen, Pulver, Schäume, Pasten, Granulate, Aerosole, Wirkstoff-imprägnierte Natur- und synthetische Stoffe, Feinstverkapselungen in polymeren Stoffen. Die Formulierungen können die üblichen Hilfs- und Zusatzstoffe enthalten.

Diese Formulierungen werden in bekannter Weise hergestellt, z.B. durch Vermischen der Wirkstoffe mit Streckmitteln, also flüssigen Lösungsmitteln, unter Druck stehenden verflüssigten Gasen und/oder festen Trägerstoffen, gegebenenfalls unter Verwendung von oberflächenaktiven Mitteln, also Emulgiermitteln und/oder Dispergiermitteln und/oder schaumerzeugenden Mitteln.

Im Falle der Benutzung von Wasser als Streckmittel könne z.B. auch organische Lösungsmittel als Hilfslösungsmittel verwendet werden. Als flüssige Lösungsmittel kommen im wesentlichen infrage: Aromaten, wie Xylol, Toluol, Alkylnaphthaline, chlorierte Aromaten oder chlorierte aliphatische Kohlenwasserstoffe, wie Chlorbenzole, Chlorethylene, oder Methylenchlorid, aliphatische Kohlenwasserstoffe, wie Cyclohexan oder Paraffine, z.B. Erdölfraktionen, mineralische und pflanzliche Öle, Alkohole, wie Butanol oder Glykol sowie deren Ether und Ester, Ketone, wie Aceton, Methylethylketon, Methylisobutylketon oder Cyclohexanon, stark polare Lösungsmittel, wie Dimethylformamid oder Dimethylsulfoxid, sowie Wasser.

Als feste Trägerstoffe kommen in Frage: z.B. Ammoniumsalze und natürliche Gesteinsmehle, wie Kaoline, Tonerden, Talkum, Kreide, Quarz, Attapulgit, Montmorillonit oder Diatomeenerde und synthetische Gesteinsmehle, wie hochdisperse Kleselsäure, Aluminiumoxid und Silikate; als feste Trägerstoffe für Granulate kommen infrage: z.B. gebrochene und fraktionierte natürliche Gesteine wie Calcit, Marmor, Bims, Sepiolith, Dolomit sowie synthetische Granulate aus anorganischen und organischen Mehlen sowie Granulate aus organischem Material wie Sägemehl, Kokosnußschalen, Maiskolben und Tabakstengel; als Emulgier- und/oder schaumerzeugende Mittel kommen infrage: z.B. nicht ionogene und anionische Emulgatoren, wie Polyoxyethylen-Fettsäureester, Polyoxyethylen-Fettalkohol-Ether, z.B. Alkylarylpolyglykolether, Alkylsulfonate, Alkylsulfate, Arylsulfonate sowie Eiweißhydrolysate; als Dispergiermittel kommen infrage: z.B. Ligninsulfitablaugen und Methylcellulose.

Es können in den Formulierungen Haftmittel wie Carboxymethylcellulose, natürliche und synthetische, pulverige, körnige oder latexförmige Polymere verwendet werden, wie Gummiarabicum, Polyvinylalkohol, Polyvinylacetat, sowie natürliche Phospholipide, wie Kephaline und Lecithine und synthetische Phospholipide. Weitere Additive können mineralische und vegetabile Öle sein.

Die herbizide Wirkung der erfindungsgemäßen Herbizid-Safener Kombination kann z.B. gleichemaßen durch oberflächenaktive Substanzen verbessert werden, vorzugsweise durch Netzmittel aus der Reihe der Fettalkohol-Polyglykolether. Die Fetalkohol-Polyglykolether enthalten vorzugsweise 10 - 18 C-Atome im Fettalkoholrest und 2 - 20 Ethylenoxideinheiten im Polyglykoletherteil. Die Fettalkohol-Polyglykolether können nichtionisch vorliegen, oder ionisch, z.B. in Form von Fettalkohol-Polyglykolethersulfaten, vorliegen, die z.B. als Alkalisalze (z.B. Natrium- und Kaliumsalze) oder Ammoniumsalze, oder auch als Erdalkalisalze wie Magnesiumsalze verwendet werden, wie C₁₂/C₁₄-Fettalkohol-diglykolethersulfat-Natrium (Genapol^{®} LRO, Clariant GmbH); siehe z.B. EP-A-0476555, EP-A-0048436, EP-A-0336151 oder US-A-4,400,196 sowie Proc. EWRS Symp. "Factors Affecting Herbicidal Activity and Selectivity", 227 - 232 (1988). Nichtionische Fettalkohol-Polyglykolether sind beispielsweise 2 - 20, vorzugsweise 3 - 15, Ethylenoxideinheiten enthaltende (C₁₀- C₁₈)-, vorzugsweise (C₁₀-C₁₄)-Fettalkohol-Polyglykolether (z.B. Isotridecylalkohol-Polyglykotether) z.B. aus der Genapol^{®} X-Reihe wie Genapol^{®} X-030, Genapol^{®} X-060, Genapol^{®} X-080 oder Genapol^{®} X-150 (alle von Clariant GmbH).

Die vorliegende Erfindung umfaßt ferner die Kombination von Komponenten A und B mit den vorgängig genannten Netzmitteln aus der Reihe der Fettalkohol-Polyglykolether, die vorzugsweise 10 - 18 C-Atome im Fettalkoholrest und 2 - 20 Ethylenoxideinheiten im Polyglykoletherteil enthalten und nichtionisch oder ionisch (z.B. als Fettalkohol-polyglykolethersulfate) vorliegen können. Bevorzugt sind C₁₂/C₁₄-Fettalkohol-diglykolethersulfat-Natrium (Genapol^{®} LRO, Clariant GmbH) und Isotridecylalkohol-Polyglykolether, mit 3 - 15 Ethylenoxideneinheiten, z.B. aus der Genapol^{®} X-Reihe wie Genapol^{®} X-030, Genapol^{®} X-060, Genapol^{®} X-080 und Genapol^{®} X-150 (alle von Clariant GmbH). Weiterhin ist bekannt, daß Fettalkohol-Polyglykolether wie nichtionische oder ionische Fettalkohol-polyglykolether (z.B. Fettalkohol-Polyglykolethersulfate) auch als Penetrationshilfsmittel und Wirkungsverstärker für eine Reihe anderer Herbizide geeignet sind (siehe z.B. EP-A-0502014).

Weiterhin ist bekannt, daß Fettalkohol-Polyglykolether wie nichtionische oder ionische Fettalkohol-Polyglykolether (z.B. Fettalkohol-Polyglykolethersulfate) auch als Penetrationshilfsmittel und Wirkungsverstärker für eine Reihe anderer Herbizide, geeignet sind (siehe z.B. EP-A-0502014).

Die herbizide Wirkung der erfindungsgemäßen Herbizid-Safener Kombinationen kann auch durch die Verwendung von Pflanzenölen verstärkt werden. Unter dem Begriff Pflanzenöle werden Öle aus ölliefernden Pflanzenarten wie Sojaöl, Rapsöl, Maiskeimöl, Sonnenblumenöl, Baumwollsaatöl, Leinöl, Kokosöl, Palmöl, Distelöl oder Rhizinusöl, insbesondere Rapsöl verstanden, sowie deren Umesterungsprodukte, z. B. Alkylester wie Rapsölmethylester oder Rapsölethylester.

Die Pflanzenöle sind bevorzugt Ester von C₁₀-C₂₂-, vorzugsweise C₁₂-C₂₀-Fettsäuren. Die C₁₀-C₂₂-Fettsäureester sind beispielsweise Ester ungesättigter oder gesättigter C₁₀-C₂₂-Fettsäuren, insbesondere mit gerader Kohlenstoffatomzahl, z.B. Erucasäure, Laurinsäure, Palmitinsäure und insbesondere C₁₈-Fettsäuren wie Stearinsäure, Ölsäure, Linolsäure oder Linolensäure.

Beispiele für C₁₀-C₂₂-Fettsäure-Ester sind Ester, die durch Umsetzung von Glycerin oder Glykol mit den C₁₀-C₂₂-Fettsäuren erhalten werden, wie sie z.B. in Ölen aus ölliefernden Pflanzenarten enthalten sind, oder C₁-C₂₀-Alkyl-C₁₀C₂₂-Fettsäure-Ester, wie sie z.B. durch Umesterung der vorgenannten Glycerin- oder Glykol-C₁₀-C₂₂-Fettsäure-Ester mit C₁-C₂₀-Alkoholen (z.B. Methanol, Ethanol, Propanol oder Butanol) erhalten werden können. Die Umesterung kann nach bekannten Methoden erfolgen, wie sie z.B. beschrieben sind im Römpp Chemie Lexikon, 9. Auflage, Band 2, Seite 1343, Thieme Verlag Stuttgart.

Als C₁-C₂₀-Alkyl-C₁₀-C₂₂-Fettsäure-Ester bevorzugt sind Methylester, Ethylester, Propylester, Butylester, 2-ethyl-hexylester und Dodecylester. Als Glykol- und Glycerin-C₁₀-C₂₂-Fettsäure-Ester bevorzugt sind die einheitlichen oder gemischten Glykolester und Glycerinester von C₁₀-C₂₂-Fettsäuren, insbesondere solcher Fettsäuren mit gerader Anzahl an Kohlenstoffatomen, z.B. Erucasäure, Laurinsäure, Palmitinsäure und insbesondere C₁₈-Fettsäuren wie Stearinsäure, Ölsäure, Linolsäure oder Linolensäure.

Die Pflanzenöle können in den erfindungsgemäßen Herbizid-Safener Kombiantionen z.B. in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester) enthalten sein.

Die vorliegende Erfindung umfasst in einer weiteren Ausführungsform Kombinationen mit den vorgängig genannten Pflanzenöle wie Rapsöl, bevorzugt in Form kommerziell erhältlicher ölhaltiger Formulierungszusatzstoffe, insbesondere solcher auf Basis von Rapsöl wie Hasten^{®} (Victorian Chemical Company, Australien, nachfolgend Hasten genannt, Hauptbestandteil: Rapsölethylester), Actirob^{®}B (Novance, Frankreich, nachfolgend ActirobB genannt, Hauptbestandteil: Rapsölmethylester), Rako-Binol^{®} (Bayer AG, Deutschland, nachfolgend Rako-Binol genannt, Hauptbestandteil: Rapsöl), Renol^{®} (Stefes, Deutschland, nachfolgend Renol genannt, Pflanzenölbestandteil: Rapsölmethylester) oder Stefes Mero^{®} (Stefes, Deutschland, nachfolgend Mero genannt, Hauptbestandteil: Rapsölmethylester). Es können Farbstoffe wie anorganische Pigmente, z.B. Eisenoxid, Titanoxid, Ferrocyanblau und organische Farbstoffe, wie Alizarin-, Azo- und Metallphthalocyaninfarbstoffe und Spurennährstoffe wie Salze von Eisen, Mangan, Bor, Kupfer, Kobalt, Molybdän und Zink verwendet werden.

Die Formulierungen enthalten im allgemeinen zwischen 0,1 und 95 Gewichtsprozent Wirkstoff, vorzugsweise zwischen 0,5 und 90 Gew.-%.

Die Herbizide (A) und die Safener (B) können als solche oder in ihren Formulierungen auch in Mischung mit anderen agrochemischen Wirkstoffen, wie bekannten Herbiziden, zur Bekämpfung von unerwünschtem Pflanzenwuchs, z.B, zur Unkrautbekämpfung oder zur Bekämpfung von unerwünschten Kulturpflanzen Verwendung finden, wobei z.B. Fertigformulierungen oder Tankmischungen möglich sind.

Auch Mischungen mit anderen bekannten Wirkstoffen wie Fungiziden, Insektiziden, Akariziden, Nematiziden, Safenem, Schutzstoffen gegen Vogelfraß, Pflanzennährstoffen und Bodenstrukturverbesserungsmitteln sind möglich, ebenso mit im Pflanzenschutz üblichen Zusatzstoffen und Formulierungshilfsmitteln.

Die Herbizide (A) und die Safener (B) können als solche, in Form ihrer Formulierungen oder den daraus durch weiteres Verdünnen bereiteten Anwendungsformen, wie gebrauchsfertige Lösungen, Suspensionen, Emulsionen, Pulver, Pasten und Granulate angewandt werden. Die Anwendung geschieht in üblicher Weise, z.B. durch Gießen, Spritzen, Sprühen, Streuen.

Die Wirkstoffe können auf die Pflanzen, Pflanzenteile, das Saatgut oder die Anbaufläche (Ackerboden) ausgebracht werden, vorzugsweise auf das Saatgut oder die grünen Pflanzen und Pflanzenteile und gegebenenfalls zusätzlich auf den Ackerboden. Eine Möglichkeit der Anwendung ist die gemeinsame Ausbringung der Wirkstoffe in Form von Tankmischungen, wobei die optimal formulierten konzentrierten Formulierungen der Einzelwirkstoffe gemeinsam im Tank mit Wasser gemischt und die erhaltene Spritzbrühe ausgebracht wird.

Eine gemeinsame Formulierung der erfindungsgemäßen Kombination an Wirkstoffen (A) und (B) hat den Vorteil der leichteren Anwendbarkeit, weil die Mengen der Komponenten bereits im optimalen Verhältnis zueinander eingestellt werden können. Außerdem können die Hilfsmittel in der Formulierung aufeinander optimal abgestimmt werden.

Als Kombinationspartner für die erfindungsgemäße Herbizid-Safener-Kombination in Mischungsformulierungen oder im Tank-Mix sind beispielsweise bekannte agrochemische Wirkstoffe wie Herbizide, vorzugsweise herbizide Wirkstoffe, die auf einer Inhibition von beispielsweise Acetolactat-Synthase, Acetyl-Coenzym-A-Carboxylase, PS I, PS II, HPPDO, Phytoene-Desaturase, Protoporphyrinogen-Oxidase, Glutamine-Synthetase, Celluloseblosynthese, 5-Enolpyruvylshikimat-3-phosphat-Synthetase beruhen, wie sie z.B. in Weed Research 26, 441-445 (1986), oder "The Pesticide Manual", 13th edition, The British Crop Protection Council, 2003, oder 14. Auflage 2006/2007, oder in dem entsprechenden "e-Pesticide Manual", Version 4 (2006), jeweils herausgegeben vom British Crop Protection Council, (im Folgenden auch kurz "PM"), und dort zitierter Literatur beschrieben sind, möglich. Listen von "Common names" sind auch in "The Compendium of Pesticide Common Names" im Internet verfügbar. Die Herbizide sind dabei entweder mit dem "common name" nach der International Organization for Standardization (ISO) oder mit dem chemischen Namen, ggf. zusammen mit einer üblichen Codenummer bezeichnet und umfassen stets sämtliche Anwendungsformen wie Säuren, Salze, Ester und Isomere wie Stereoisomere und optische Isomere. Dabei sind eine und zum Teil auch mehrere Anwendungsformen genannt: acetochlor; acibenzolar-S-methyl; acifluorfen(-sodium); aclonifen; AD-67; AKH 7088, d.h. [[[1-[5-[2-Chloro-4-(trifluoromethyl)-phenoxy]-2-nitrophenyl]-2-methoxyethylidene]-amino]-oxy]-essigsäure und -essigsäuremethylester; alachlor; alloxydim(-sodium); ametryn; amicarbazone, amidochlor, amidosulfuron; aminopyralid; amitrol; Ammoniumpelargonate; AMS, d.h. Ammoniumsulfamat; ancimidol; anilofos; asulam; atrazine; aviglycine; azafenidin, azimsulfuron (DPX-A8947); aziprotryn; barban; BAS 516 H, d.h. 5-Fluor-2-phenyl-4H-3,1-benzoxain-4-on; beflubutamid (UBH-509), benazolin(-ethyl); bencarbazone; benfluralin; benfuresate; bensulfuron(-methyl); bensulide; bentazone; benzfendizone; benzobicyclon, benzofenap; benzofluor; benzoylprop(-ethyl); benzthiazuron; bilanaphos; bifenox; bispyribac(-sodium) (KIH-2023); borax; bromacil; bromobutide; bromofenoxim; bromoxynil; bromuron; buminafos; busoxinone; butachlor; butafenacil; butamifos; butenachlor (KH-218); buthidazole; butralin; butroxydim; butylate; cafenstrole (CH-900); caloxydim; carbetamide; carfentrazone(-ethyl); catechin; CDAA, d.h. 2-Chlor-N,N-di-2-propenylacetamid; CDEC, d.h. Diethyldithiocarbaminsäure-2-chlorallylester; chlormesulon; chlomethoxyfen; chloramben; chlorazifop-butyl; chlorbromuron; chlorbufam; chlorfenac; chlorfenprop; chlorflurecol(-methyl); chlorflurenol(-methyl); chloridazon; chlorimuron(-ethyl); chlormequat(-chloride); chlornitrofen; chlorophthalim (MK-616); chlorotoluron; chloroxuron; chlorpropham; chlorsulfuron; chlorthal-dimethyl; chlorthiamid; chlortoluron; cinidon(-methyl und -ethyl); cinmethylin; cinosulfuron; clefoxydim; clethodim; clodinafop und dessen Esterderivate (z.B. clodinafop-propargyl); clofencet; clomazone; clomeprop; cloprop; cloproxydim; clopyralid; clopyrasulfuron(methyl); cloransulam(-methyl); cumyluron (JC 940); cyanamide; cyanazine; cycloate; cyclosulfamuron (AC 104); cycloxydim; cycluron; cyhalofop und dessen Esterderivate (z.B. Butylester, DEH-112); cyperquat; cyprazine; cyprazole; daimuron; 2,4-D; 2,4-DB; dalapon; daminozide; dazomet; n-decanol; desmedipham; desmetryn; di-allate; dicamba; dichlobenil; dichlormid; dichlorprop(-P)-salze; diclofop und dessen Ester wie diclofop-methyl; diclofop-P(-methyl); diclosulam; diethatyl(-ethyl); difenoxuron; difenzoquat(-metilsulfate); diflufenican; diflufenzopyr(-sodium); dimefuron; dimepiperate; dimethachlor; dimethametryn; dimethazone; dimethenamid (SAN-582H); dimethenamide-P; dimethylarsinic acid; dimethipin; dimetrasulfuron; dimexyflam; dinitramine; dinoseb; dinoterb; diphenamid; dipropetryn; diquat-salze; dithiopyr; diuron; DNOC; eglinazine-ethyl; EL 77, d.h. 5-Cyano-1-(1,1-dimethylethyl)-N-methyl-1H-pyrazole-4carboxamid; endothal; epoprodan; EPTC; esprocarb; ethalfluralin; ethametsulfuron-methyl; ethephon; ethidimuron; ethiozin; ethofumesate; ethoxyfen und dessen Ester (z.B. Ethylester, HN-252); ethoxysulfuron; etobenzanid (HW 52); F5231, d.h. N-[2-Chlor-4-fluor-5-[4-(3-fluorpropyl)-4,5-dihydro-5-oxo-1H-tetrazol-1-yl]-phenyl]-ethansulfonamid; fenchlorazole(-ethyl); fenclorim; fenoprop; fenoxan, fenoxaprop und fenoxaprop-P sowie deren Ester, z.B. fenoxaprop-P-ethyl und fenoxaprop-ethyl; fenoxydim; fentrazamide; fenuron; ferrous sulfate; flamprop(-methyl oder-isopropyl oder -isopropyl-L); flamprop-M(-methyl oder -isopropyl); flazasulfuron; floazulate (JV-485); florasulam; fluazifop und fluazifop-P und deren Ester, z.B. fluazifop-butyl und fluazifop-P-butyl; fluazolate; flucarbazone(-sodium); flucetosulfuron; fluchloralin; flufenacet; flufenpyr(-ethyl); flumetralin; flumetsulam; flumeturon; flumiclorac(-pentyl); flumioxazin (S-482); flumipropyn; fluometuron; fluorochloridone; fluorodifen; fluoroglycofen(-ethyl); flupoxam (KNW-739); flupropacil (UBIC-4243); flupropanoate; flupyrsulfuron(-methyl)(-sodium); flurenol(-butyl); fluridone; flurochloridone; fluroxypy(-meptyl); flurprimidol; flurtamone; fluthiacet(-methyl) (KIH-9201); fluthiamide; fluxofenim; fomesafen; foramsulfuron; forchlorfenuron; fosamine; furyloxyfen; gibberillic acid; glufosinate(-ammonium); glyphosate(-isopropylammonium); halosafen; halosulfuron(-methyl); haloxyfop und dessen Ester; haloxyfop-P (= R-haloxyfop) und dessen Ester; HC-252; hexazinone; HNPC-C9908, d.h. 2-[[[[[4-Methoxy-6-(methylthio)-2-pyrimidinyl]amino]carbonyl]amino]sulfonyl]-benzoesäuremethylester; imazamethabenz(-methyl); imazamox; imazapic; imazapyr; imazaquin und Salze wie das Ammoniumsalz; imazethapyr; imazosulfuron; inabenfide; indanofan; iodosulfuron-methyl(-sodium); ioxynil; isocarbamid; isopropalin; isoproturon; isouron; isoxaben; isoxachlortole; isoxaflutole; isoxapyrifop; karbutilate; lactofen; lenacil; linuron; Maleinsäurehydrazid (MH); MBTA; MCPA; MCPB; mecoprop(-P); mefenacet; mefluidide; mepiquat(-chioride); mesosulfuron(-methyl); mesotrione; metam; metamifop; metamitron; metazachlor; methabenzthiazuron; metham; methazole; methoxyphenone; methylarsonic acid; methyl-cyclopropene; methyldymron; methylisothiocyanate; methabenzthiazuron; metobenzuron; metobromuron; (alpha-)metolachlor; metosulam (XRD 511); metoxuron; metribuzin; metsulfuron-methyl; molinate; monalide; monocarbamide dihydrogensulfate; monolinuron; monuron; monosulfuron; MT 128, d.h. 6-Chlor-N-(3-chlor-2-propenyl)-5-methyl-N-phenyl-3-pyridainamin; MT 5950, d.h. N-[3-Chlor-4-(1-methylethyl)-phenyl]-2-methylpentanamid; naproanilide; napropamide; naptalam; NC 310, d.h. 4-(2,4-dichlorbenzoyl)-1-methyl-5-benzyloxypyrazol; neburon; nicosulfuron; nipyraclofen; nitralin; nitrofen; nitrophenolate mixture; nitrofluorfen; nonanoic acid; norflurazon; orbencarb; orthosulfamuron; oxabetrinil; oryzalin; oxadiargyl (RP-020630); oxadiazon; oxasulfuron; oxaziclomefone; oxyfluorfen; paclobutrazol; paraquat(-dichloride); pebulate; pelargonic acid; pendimethalin; penoxulam; pentachlorophenol; pentanochlor; pentoxazone; perfluidone; pethoxamid; phenisopham; phenmedipham; picloram; picolinafen; pinoxaden; piperophos; piributicarb; pirifenop-butyl; pretilachlor; primisulfuron(-methyl); probenazole; procarbazone-(sodium); procyazine; prodiamine; profluralin; profoxydim; prohexadione(-calcium); prohydrojasmon; proglinazine(-ethyl); prometon; prometryn; propachlor; propanil; propaquizafop und dessen Ester; propazine; propham; propisochlor; propoxycarbazone(-sodium) (MKH-6561); propyzamide; prosulfalin; prosulfocarb; prosulfuron (CGA-152005); prynachlor; pyraclonil; pyraflufen(-ethyl) (ET-751); pyrasulfotole; pyrazolynate; pyrazon; pyrazosulfuron(-ethyl); pyrazoxyfen; pyribambenz-isopropyl (ZJ 0702); pyrimbambenz-propyl (ZJ 0273); pyribenzoxim; pyributicarb; pyridafol; pyridate; pyriftalid; pyriminobac(-methyl) (KIH-6127); pyrimisulfan (KIH-5996); pyrithiobac(-sodium) (KIH-2031); pyroxasulfone (KIH-485); pyroxofop und dessen Ester (z.B. Propargylester); pyroxsulam; quinclorac; quinmerac; quinoclamine; quinofop und dessen Esterderivate, quizalofop und quizalofop-P und deren Esterderivate z.B. quizalofop-ethyl; quizalofop-P-tefuryl und -ethyl; renriduron; rimsulfuron (DPX-E 9636); S 275, d.h. 2-[4-Chlor-2-fluor-5-(2-propynyloxy)-phenyl]-4,5,6,7-tetrahydro-2H-indazol; secbumeton; sethoxydim; siduron; simazine; simetryn; sintofen; SN 106279, d.h. 2-[[7-[2-Chlor-4-(trifluormethyl)-phenoxy]-2-naphthalenyl]-oxy]-propansäure und -methylester; sulcotrione; sulfentrazone (FMC-97285, F-6285); sulfazuron; sulfometuron(-methyl); sulfosate (ICI-A0224); sulfosulfuron; TCA(-sodium); tebutam (GCP-5544); tebuthiuron; tecnacene; tefuryltrione; tembotrione; tepraloxydim; terbacil; terbucarb; terbuchlor; terbumeton; terbuthylazine; terbutryn; TFH 450, d.h. N,N-Diethyl-3-[(2-ethyl-6-methylphenyl)-sulfonyl]-1H-1,2,4-triazol-1-carboxamid; thenylchlor (NSK-850); thiafluamide, thiazafluron; thiazopyr (Mon-13200); thidiazimin (SN-24085); thidiazuron; thiencarbazone(-methyl); thifensulfuron(-methyl); thiobencarb; Ti 35; tiocarbazil; topramezone; tralkoxydim; tri-allate; triasulfuron; triaziflam; triazofenamide; tribenuron(-methyl); triclopyr; tridiphane; trietazine; trifloxysulfuron(-sodium); trifluralin; triflusulfuron und Ester (z.B. Methylester, DPX-66037); trimeturon; trinexapac; tritosulfuron; tsitodef; uniconazole; vernolate; WL 110547, d.h. 5-Phenoxy-1-[3-(trifluormethyl)-phenyl]-1H-tetrazol; D-489; ET-751; KIH-218; KIH-485; KIH-509; KPP-300; LS 82-556; NC-324; NC-330; DPX-N8189; SC-0774; DOWCO-535; DK-8910; V-53482; PP-600; MBH-001; TH-547; SYN-523; IDH-100_{;} SYP-249; HOK-201; IR-6396; MTB-951; NC-620.

Zur Anwendung können in handelsüblicher Form vorliegende Formulierungen gegebenenfalls in üblicher Weise verdünnt werden, z.B. mittels Wasser. Staubförmige Zubereitungen, Boden- bzw. Streugranulate sowie versprühbare Lösungen werden vor der Anwendung üblicherweise nicht mehr mit weiteren inerten Stoffen verdünnt.

### Biologische Beispiele

1. Unkrautwirkung im Vorauflauf Samen beziehungsweise Rhizomstücke von mono- und dikotylen Unkrautpflanzen wurden in Papptöpfen in sandiger Lehmerde ausgelegt und mit Erde abgedeckt. Die in Form von benetzbaren Pulvern oder Emulsionskonzentraten formulierten Wirkstoffe (A) und (B) wurden dann als wäßrige Suspensionen bzw. Emulsionen mit einer Wasseraufwandmenge von umgerechnet 100 bis 800 l/ha in unterschiedlichen Dosierungen auf die Oberfläche der Abdeckerde appliziert. Nach der Behandlung wurden die Töpfe im Gewächshaus aufgestellt und unter guten Wachstumsbedingungen für die Unkräuter gehalten. Die optische Bonitur der Pflanzen- bzw. Auflaufschäden erfolgte nach dem Auflaufen der Versuchspflanzen nach einer Versuchszeit von 3 bis 4 Wochen im Vergleich zu unbehandelten Kontrollen. Wie die Ergebnisse zeigen, weisen die getesteten Herbizid-Kombinationen eine gute herbizide Vorauflaufwirksamkeit gegen ein breites Spektrum von Ungräsem und Unkräutern auf. Die Kombinationen des 2-lodo-N-[(4-methoxy-6-methyl-1,3,5-thiazin-2-yl)carbamoyl]benzolsulfonamids und von in Tabelle A genannten Verbindungen der Formel (I) weisen vor allem mit den Safenem der Verbindungen der Formeln S1-1, S1-9, S2-1 und S3-1 gegen Schadpflanzen wie Sinapis alba, Chrysanthemum segetum, Avena sativa, Stellaria media, Echinochloa crus-galli, Lolium multiflorum, Setaria viridis, Abutilon theophrasti, Amaranthus retroflexus und Panicum miliaceum im Vorauflaufverfahren bei einer Aufwandmenge von 100 g und weniger Aktivsubstanz pro Hektar.
2. Unkrautwirkung im Nachauflauf Samen bzw. Rhizomstücke von mono- und dikotylen Unkräutern wurden in Plastiktöpfen in sandigem Lehmboden ausgelegt, mit Erde abgedeckt und im Gewächshaus unter guten Wachstumsbedingungen angezogen. Drei Wochen nach der Aussaat wurden die Versuchspflanzen im 2-4 Blattstadium behandelt. Die als Spritzpulver bzw. als Emulsionskonzentrate formulierten erfindungsgemäßen Verbindungen wurden in verschiedenen Dosierungen mit einer Wasseraufwandmenge von umgerechnet 100 bis 800 l/ha auf die grünen Pflanzenteile gesprüht. Nach 3 bis 4 Wochen Standzeit der Versuchspflanzen im Gewächshaus unter optimalen Wachstumsbedingungen wurde die Wirkung der Präparate optisch im Vergleich zu unbehandelten Kontrollen bonitiert. Allgemein weisen die erfindungsgemäßen Herbizid-Kombinationen auch im Nachauflauf eine gute herbizide Wirksamkeit gegen ein breites Spektrum wirtschaftlich wichtiger Ungräser und Unkräuter auf. Die Kombinationen des 2-lodo-N-[(4-methoxy-6-methyl-1,3,5-triazin-2-yl)carbamoyl]benzolsulfonamids und von in Tabelle A genannten Verbindungen der Formel (I) weisen vor allem mit den Safenem der Verbindungen der Formeln S1-1, S1-9, S2-1 und S3-1 sehr gute herbizide Wirkung gegen Schadpflanzen wie Sinapis alba, Echinochloa crus-galli, Digitaria sanguinalis, Lolium multiflorum, Chrysanthemum segetum, Setaria viridis, Polygonum convolvulus, Abutilon theophrasti, Amaranthus retroflexus, Panicum miliaceum und Avena sativa im Nachauflaufverfahren bei einer Aufwandmenge von 100 g und weniger Aktivsubstanz pro Hektar.
3. Kulturpflanzenverträglichkeit In weiteren Versuchen im Gewächshaus wurden Samen einer größeren Anzahl von Kulturpflanzen und Unkräutern in sandigem Lehmboden ausgelegt und mit Erde abgedeckt. Ein Teil der Töpfe wurde sofort wie unter Abschnitt 1 beschrieben behandelt, die übrigen im Gewächshaus aufgestellt, bis die Pflanzen zwei bis drei echte Blätter entwickelt haben und dann wie unter Abschnitt 2 beschrieben mit den erfindungsgemäßen Herbizid-Safener-Kombinationen in unterschiedlichen Dosierungen besprüht. Vier bis fünf Wochen nach der Applikation und Standzeit im Gewächshaus wurde mittels optischer Bonitur festgestellt, daß die getesteten Herbizid-Safener-Kombinationen, d.h. des 2-Iodo-N-[(4-methoxy-6-methyl-1,3,5-triazin-2-yl)carbamoyl]benzolsulfonamids und der in Tabelle A genannten Verbindungen der Formel (I) weisen vor allem mit den Safenern der Verbindungen der Formeln S1-1, S1-9, S2-1 und S3-1 in Pflanzenkulturen wie Baumwolle, Raps, Zuckerrohr, Zuckerrüben sowie Gramineen-Kulturen wie Gerste, Weizen, Roggen, Hirsen, Mais oder Reis im Vor- und Nachauflaufverfahren ungeschädigt ließen.

## Patentansprüche

1. Herbizid-Safener-Kombination, enthaltend
(A) ein oder mehrere Herbizide aus der Gruppe bestehend aus dem 2-Iodo-N-[(4-methoxy-6-methyl-1,3,5-triazin-2-I)carbamoyl]benzolsulfonamid und Verbindungen der allgemeinen Formel (I) 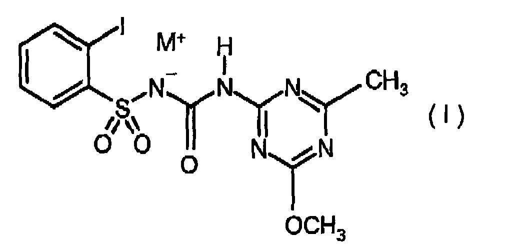 wobei das Kation (M⁺) (a) ein Ion der Alkalimetalle, bevorzugt Lithium, Natrium,
Kalium, oder
(b) ein Ion der Erdalkalimetalle, bevorzugt Calcium und
Magnesium, oder
(c) ein Ion der Übergangsmetalle, bevorzugt Mangan,
Kupfer, Zink und Eisen, oder
(d) ein Ammonium-Ion, bei dem gegebenenfalls ein, zwei, drei oder alle vier Wasserstoffatome, durch gleiche oder verschiedene Reste aus der Gruppe (C₁-C₄)-Akyl,
Hydroxy-(C₁-C₄)-Alkyl, (C₃-C₆)-Cycloalkyl, (C₁-C₄)-Alkoxy-
(C₁-C₄)-alkyl, Hydroxy-(C₁-C₄)-alkoxy-(C₁-C₄)-alkyl, (C₁-
C₆)-Mercaptoalkyl, Phenyl oder Benzyl substituiert sind, wobei die zuvor genannten Reste gegebenenfalls durch einen oder mehrere, gleiche oder verschiedene Reste aus der Gruppe Halogen, wie F, Cl, Br oder I, Nitro,
Cyano, Azido, (C₁-C₆)-Alkyl, (C₁-C₆)-Haloalkyl, (C₃-C₆)-
Cycloalkyl, (C₁-C₆)-Alkoxy, (C₁-C₈)-Haloalkoxy und Phenyl substituiert sind, und wobei jeweils zwei Substituenten am
N-Atom zusammen gegebenfalls einen unsubstituierten oder substituierten Ring bilden, oder
(e) ein Phosphonium-Ion, oder
(f) ein Sulfonium-Ion, bevorzugt Tri-(C₁-C₄)-alkyl)-sulfonium, oder
(g) ein Oxonium-Ion, bevorzugt Tri-((C₁-C₄)-alkyl)-oxonium, oder
(h) gegebenenfalls einfach oder mehrfach annellierte und/oder durch (C₁-C₄)-Alkyl substituierte gesättigte oder ungesättigte/aromatische N-haltige heterocyclische
ionische Verbindung mit 1-10 C-Atomen im Ringsystem ist. bedeutet, und
(B) einen oder mehrere Safener.

2. Herbizid-Safener-Kombination gemäß Anspruch 1, worin die Verbindung Herbizid (A) dem 2-Iodo-N-[(4-methoxy-6-methyl-1,3,5-triazin yl)carbamoyl]benzolsulfonamid oder Verbindungen der Formel (I), in denen das Kation (M⁺)
ein Natrium-Ion, ein Kalium-Ion, ein Lithium-Ion, ein Magnesium-Ion, ein Calcium-Ion, ein NH₄⁺-Ion, ein (2-Hydroxyeth-1-yl)ammonium-Ion, Bis-N,N-(2-hydroxyeth-1-yl)ammonium-Ion, Tris-N,N,N-(2-hydroxyeth-1-yl)ammonium-Ion, ein Methylammonium-Ion, ein Dimethylammonium-Ion, ein
Trimethylammonium-Ion, ein Tetramethylammonium-Ion ein Ethylammonium-Ion, ein Diethylammonium-Ion, ein Triethylammonium-Ion, ein
Tretraethylammonium-Ion ein Isopropylammonium-Ion, ein
Diisopropylammonium-Ion, ein Tetrapropylammonium-Ion, ein
Tetrabutylammonium-Ion, ein 2-(2-Hydroxyeth-1-oxy)eth-1-yl-ammonium-lon, ein Di-(2-hydroxyeth-1-yl)-ammonium-Ion, ein Trimethylbenzylammonium-Ion, ein Tri-((C₁-C₄)-alkyl)-sulfonium-lon, oder ein Tri-((C₁-C₄)-alkyl)-oxonium-Ion, ein Benzylammonium-Ion, ein 1-Phenylethylammonium-lon, ein 2-
Phenylethylammonium-Ion, ein Diisopropylethylammonium-Ion, ein
Pyridinium-Ion, ein Piperidinium-Ion, ein Imidazolium-Ion, ein Morpholinium-Ion, ein 1,8-Diazabicyclo[5.4.0]undec-7-enium-Ion ist, entspricht

3. Herbizid-Safener-Kombination gemäß Anspruch 1 oder 2, worin der oder die Safener (B) ausgewählt sind aus der Gruppe bestehend aus: Verbindungen S1-1 (=Mefenpyr-diethyl), S1-9 (Isoxadifen-ethyl), S2-1 (=Chloquintocet-mexyl) und S3-1 (= Cyprosulfamide).

4. Herbizid-Safener-Kombination gemäß einem oder mehreren der Ansprüche 1 bis 3, zusätzlich enthaltend einen oder mehrere weitere agrochemische Wirkstoffe und/oder im Pflanzenschutz übliche Zusatzstoffe und Formulierungshilfsmittel. Herbizid-Safener-Kombination gemäß einem oder mehreren der Ansprüche 1 bis 3, zusätzlich enthaltend einen oder mehrere weitere agrochemische Wirkstoffe und/oder im Pflanzenschutz übliche Zusatzstoffe und Formulierungshilfsmittel.

5. Herbizid-Safener-Kombination gemäß Anspruch 4, wobei der zusätzliche weitere agrochemische Wirkstoff ein Herbizid ist.

6. Verfahren zur Bekämpfung von unerwünschten Pflanzen, vorzugsweise in Pflanzenkulturen, worin die Komponenten (A) und (B) der Herbizid-Safener-Kombination gemäß einem oder mehreren der Ansprüche 1 bis 5, gemeinsam oder getrennt appliziert werden, vorzugsweise auf die Pflanzen, das Saatgut oder die Fläche, auf der die Pflanzen wachsen.

7. Verfahren gemäß Anspruch 6, **dadurch gekennzeichnet, daß** die Pflanzenkulturen aus der Gruppe der Ackerbaukulturen, Gemüsekulturen oder Dauer- und Plantagenkulturen stammen.

8. Verfahren gemäß Anspruch 6 oder 7, **dadurch gekennzeichnet, daß** die Pflanzenkulturen transgen sind oder Toleranz durch Selektionszüchtung aufweisen.

9. Verwendung einer Herbizid-Safener-Kombination definiert gemäß einem oder mehreren der Ansprüche 1 bis 5, zur Bekämpfung von Schadpflanzen, vorzugsweise in Pflanzenkulturen.
